# EUROPEAN PATENT SPECIFICATION

(11) **EP 1 407 432 B1**
(45) Date of publication and mention of the grant of the patent: **22.08.2007**
(21) Application number: 02726286.4
(22) Date of filing: 01.05.2002
(51) Int. Cl.: G07F 19/00

(54) **SECURE PAYMENT METHOD AND SYSTEM**
GESICHERTES ZAHLUNGSVERFAHREN UND -SYSTEM
PROCEDE ET SYSTEME DE PAIEMENT SECURISE

(30) Priority: 02.05.2001 GB 0110808; 16.05.2001 US 859206
(43) Date of publication of application: 14.04.2004
(73) Proprietor: Virtual Access Limited, St. Helier JE4 8TY (GB)
(72) Inventor: TREE, Ian David, St Mary JE3 3DE (GB)
(74) Representative: Collins, John David
(86) International application number: PCT/GB2002/002004
(87) International publication number: WO 2002/089075

(56) References cited:
- EP-A- 0 951 158
- WO-A-00/39721
- WO-A-00/79367
- WO-A-01/22374
- WO-A-99/56254
- US-A- 5 930 777
- US-A- 6 157 917

## Description

The present invention generally relates to a secure payment method and system for making secure electronic payments over a network.

Online transactions between customers and merchants over the Internet are becoming increasingly more common. Such transactions can comprise the purchase of products in electronic form such as software, video, images, text, data and any other material available in electronic form that can be delivered over a network such as the Internet. The transactions can also be for conventional goods in which case the goods are delivered offline.

The problem with online transaction systems is ensuring secure payment for the purchased goods. One form of payment which has been adopted widely is payment by credit or debit cards. This method of payment is particularly suited to electronic payments over the Internet since it only requires the transmission of a credit card number. However, this method of payment has received a great deal of publicity because it fails to provide security since the customer's credit card number is exposed over the Internet to fraudsters. Although a great deal of effort has been expended in increasing the security of transactions using credit card numbers for example using encryption, digital certificates and secure communication channels (e.g. the secure socket layer), there is still an inherent weakness in that the credit card number is transmitted for payment and held by servers.

Products provided over the Internet can range greatly in price. For transactions of a threshold value e.g. a dollar or more, a credit card transaction is commercially viable.

However, where purchases made over the Internet have a much lower value, the payment for individual transactions by credit card is not commercially viable because of the transaction cost charged by the credit card companies. Thus micro payment systems have been developed in order to make micro payments by customers to merchants and to aggregate micro payments to make the billing of customers e.g. by credit card commercially viable.

An example of a prior art micro payment system is the QPass system disclosed in WO 00/33221. In this system customers and merchants register for the service. The customer and merchants are interconnected over a transaction network to which is connected a payment processor. When a customer wishes to make a purchase from a merchant, they log in to the system using a user name and password. The user name used need not be unique and is selected by the user during the process of registering for the service. A unique ID is generated for the user during registration and this is stored as a cookie on the customer's computer. Thus when a user logs on and enters their user name and user ID, the cookie is read from their computer and their unique ID is compared to the user's database. Once a user has logged on, a session cookie is stored on the user's computer and this is valid for a period of time. This enables the user to enter into transactions with merchants and the transactions are recorded at the payment processor. In this way payments made by customers for goods &om merchants can be aggregated and the customer can be billed by the payment processor when appropriate e.g. when the aggregate amount reaches a threshold.

Although the QPass system provides a transaction network that enables users to register and be authenticated so as to allow aggregation of micro payments, the system relies on cookies. Cookies provide a low level of security since these can be read and accessed readily. Further, this system requires a user to set their browser to enable cookies.

US 6,157,917 discloses another payment system which uses cookie-like objects to manage payments.

Aspects of the invention are disclosed in the independent claims.

In the present invention, the term terminal refers to any type of processing apparatus capable of being operated by a user and as a product source for the user. The merchant terminal need not be operated by a merchant but can be operated on behalf of a merchant of product. The merchant terminal principally comprises a source of products in electronic form. The processing apparatus can in one embodiment comprise any suitable programmed processing apparatus that can be connected via a communications network.

The present invention is applicable to any form of communications network capable of enabling a customer's terminal to request a product in electronic form from a merchant terminal. The present invention is particularly suited to implementation over an Internet Protocol network which is a prevalently used network form. Thus the present invention is applicable to implementation over the Internet, an Intranet, an Extranet or a local area network, for example.

The customer's terminal preferably implements a client application for communication over the communications network and a merchant's terminal implements a server application for communication over the communications network. In this embodiment, an executable application independent of the client application is executed at the customer's terminal to intercept requests input by the user using the client application in order to control the use of transaction receipts and thus the billing of the customer for retrieval of the product. Thus in accordance with this embodiment of the present invention, a simple secure payment system is provided wherein the customer need not be involved in individual transactions. The customer simply requests a product and a transaction is recorded for first retrieval of the product automatically, enabling the user to retrieve the information freely for a period thereafter.

The client application at the customer's terminal comprises a web browser and the server application implemented at the merchant's terminal comprises a web server. In this embodiment, the executable application is independent of the web browser and can conveniently act as a proxy server or can monitor HTTP requests at the socket layer.

The executable application is adapted to identify whether or not the request is a request for a chargeable product and to transmit the request unchanged over the communications network if the request is not for a chargeable product. This enables the application program to act transparently when a chargeable product is not required. When a request is for a chargeable product, a transaction receipt, if available, is added to the request for transmission over the communications network by the executable application.

The client application comprises a web browser at the customer's terminal and the server application at the merchant's terminal comprises a web server. Thus the request comprises a hyper text transfer protocol (HTTP) request wherein code can be added to the request to identify the request as a request for a chargeable product. The type of request can thus be identified by the executable application by identifying code added to the HTTP request. Conveniently, this code is added as non HTTP significant ASCII code. In accordance with the first aspect of the present invention, the generation of transaction receipts or tokens at a merchant's terminal and the storage of the transaction receipts at the customer's terminal provides a simple secure and automatic payment system for products in electronic form. The use of local storage of transaction receipts provides a secure means by which a user can retrieve subsequent copies of the product without further charge. Thus this aspect of the present invention encompasses the method and apparatus of the customer's terminal and the method and apparatus of the merchant's terminal.

In one embodiment of the first aspect of the present invention, the customer's terminal can transmit transaction receipts to a remote payment server over the communications network. This provides for the reconciliation of transactions recorded by the transaction receipts stored at the customer's terminal and the transaction data stored at the merchant's terminal.

In an alternative embodiment of the first aspect of the present invention, a customer's terminal receives transaction information from a remote payment server over the communications network and the received transaction information is compared with the stored transaction receipts. Information on the result of the comparison is then returned to the payment server. In this embodiment the bulk of the reconciliation for transactions for a user is performed within the customer's terminal. Only the result of the reconciliation process is returned to the payment server.

In another embodiment of the present invention, in addition to individual transaction receipts, the system provides for subscription receipts for subscription to regularly provided products such as electronic magazines or any other product which is published or made available on a regular basis. In this embodiment of the present invention, the user can input a request for a subscription and this request is transmitted over the communications network to the merchant's terminal. At the merchant's terminal, a subscription receipt is generated and the subscription transaction is recorded in the transaction data store. The subscription receipt is transmitted over the communications network to the customer's terminal where it is stored and used in a similar manner to the transaction receipt. The subscription receipt can be used by a customer's terminal to determine whether the product requested by the customer is one to which a customer has subscribed, e.g. an issue of a magazine to which the customer subscribes, or a medium type e.g. movie for which the customer has subscribed to receive. Thus, the subscription receipt comprises a special case of a transaction receipt which represents a transaction not just for a specific retrievable product but rather for a collection of retrievable products.

In one embodiment of the present invention, in order to provide enhanced security, the request for the product as submitted by the customer's terminal includes unique user identification information. This enables the merchant's terminal to perform a validation on the user identification information to prevent unauthorised requests for information being responded to.

The present invention can be implemented in any convenient form e.g. using dedicated hardware, or a mixture of dedicated hardware and software. The present invention is particularly suited to implementation as computer software implemented by a network of processing apparatuses. The communications network can comprise any conventional terrestrial or wireless communications network. The processing apparatuses can comprise any suitably programmable apparatuses such as a general purpose computer, personal digital assistant, mobile telephone (e.g. a WAP phone) etc. Since the present invention can be implemented as software, each and every aspect of the present invention thus encompasses computer software implementable on a programmable device. The computer software can be provided to the programmable device using any conventional carrier medium. The carrier medium can comprise a transient carrier medium such as an electrical, optical, microwave, acoustic or radio frequency signal carrying the computer code. An example of such a transient medium is a TCP/IP signal carrying computer code over a IP network e.g. the Internet. The carrier medium can also comprise a storage medium for storing processor readable code such as a floppy disk, hard disk, CD ROM, magnetic tape device or solid state memory device.

Embodiments of the present invention will now be described with reference to the accompanying drawings, in which:
Figure 1 is a schematic diagram of the secure payment system in accordance with an embodiment of the present invention;
Figure 2 is a schematic functional diagram of a user's computer in the embodiment of the present invention;
Figure 3 is a schematic diagram of the structure of the user's computer in the embodiment of the present invention;
Figure 4 is a schematic functional diagram of an information server in the embodiment of the present invention;
Figure 5 is a schematic structural diagram of the information server in the embodiment of the present invention;
Figures 6a and 6b are a flow diagram of the operation of the payment application in the user's computer in the embodiment of the present invention for the process of requesting information;
Figure 7 is a flow diagram of the operation of the payment application in the user's computer when the information is received from the information server;
Figure 8 is a flow diagram of the operation of the CGI application 2 at the information server in the embodiment of the present invention;
Figure 9 is a flow diagram illustrating the operation of the CGI application 1 at the information server in the embodiment of the present invention;
Figure 10 is a flow diagram illustrating the subscription process in the embodiment of the present invention;
Figure 11 is a flow diagram of the operation of the CGI application 3 at the information server in the embodiment of the present invention;
Figure 12a is a table of the information contained in a transaction receipt;
Figure 12b is a table of the information contained in a subscription receipt;
Figure 13 is a diagram of the user interface generated by the payment application to enable a user to input spending limit data;
Figure 14 is a flow diagram illustrating the operation of the payment application in controlling spending by the user in the embodiment of the present invention;
Figure 15 is a schematic functional diagram of the central server in the embodiment of the present invention;
Figure 16 is a schematic structural diagram of the central server in the embodiment of the present invention;
Figure 17 is a flow diagram of the user registration process;
Figure 18 is a flow diagram of the web site registration process;
Figure 19 is a flow diagram of the publisher registration process;
Figure 20 is a flow diagram of the polling operation implemented by the upload client in the central server in the embodiment of the present invention;
Figure 21 is a flow diagram of the reconciliation process performed by the upload client and transaction utility in the central server in the embodiment of the present invention;
Figure 22 is a diagram of the user interface provided by the web site manager at the information server for entering index data and cost data in the embodiment of the present invention;
Figure 23 is a diagram of the user interface for entering information on publications;
Figure 24 is a diagram of the user interface for constructing the index hierarchy in the embodiment of the present invention;
Figure 25 is a diagram of the user interface for entering web site default information;
Figure 26 is a diagram of the user interface for selecting the location of the files comprising a publication issue;
Figure 27 is a diagram of the user interface for defining Permitted Base Directories;
Figure 28 is a diagram of a web browser interface displaying an index web page to publications generated by the web site manager;
Figure 29 is a flow diagram of the index web page generation process;
Figure 30 is a flow diagram of a time synchronisation process at the information server in accordance with one embodiment of the present invention;
Figure 31 is a flow diagram of a time synchronisation process at the user's computer in accordance with one embodiment of the present invention; and
Figure 32a and 32b are flow diagrams of a method of avoiding multiple unintentional requests in accordance with one embodiment of the present invention.

In the embodiment of the present invention described hereinafter with reference to the accompanying drawings, the vendible product purchased by the user is termed content or information. Specifically, the information comprises the content of magazine publications. It is however to be understood that the present invention is not limited to the retrieval of information. The present invention encompasses retrieval of any content or product for which a charge can be made and which can be retrieved over a network by a user. Thus the present invention encompasses the purchase electronically of video, images, documents, computer data files, computer software, audio, etc.

The specific embodiment will now be described with reference to the retrieval of the content of magazine publications.

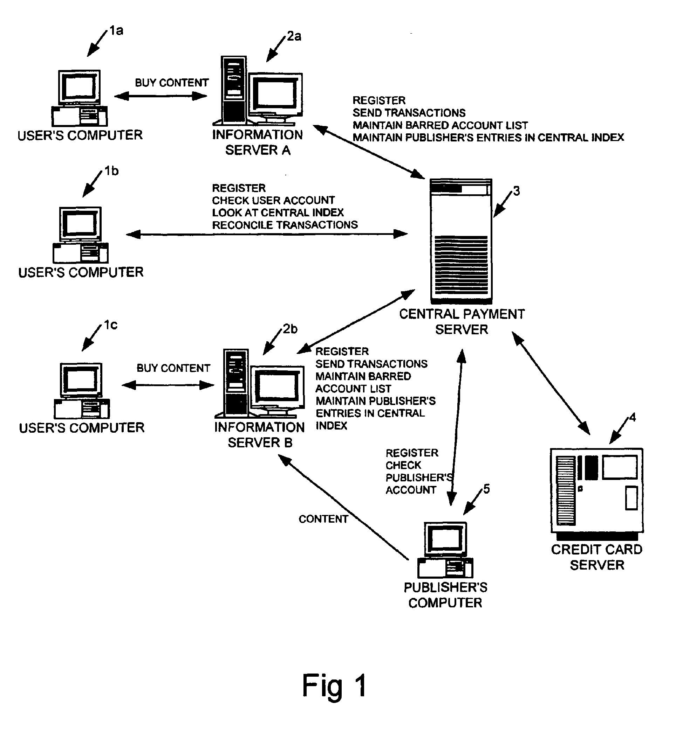

Figure 1 is a schematic diagram of a system in which users of user's computers 1a and 1c access information servers 2a and 2b in order to access information in the form of the content of magazine publications in this embodiment. In order to buy the content from the information servers 2a and 2b, the users must first register and set up an account with a central payment server 3. This is illustrated in Figure 1 by a user's computer 1b accessing the central payment server 3 to register for the service and to set up an account. Thus the central payment server 3 holds a user's account that can be accessed by the user's computer 1b in order to check the account. The central payment server 3 also holds a central index of all information available at the information servers 2a and 2b. This can be accessed by the user's computer 1b in order to identify any information server 2a or 2b holding the desired information to be purchased. Direct communication is also established between the central payment server 3 and the user's computer 1b in order to reconcile user's transactions. Receipts for information purchased using the system are stored at the user's computer and information regarding the receipts is transferred to the central payment server 3 during a reconciliation process as will be described in more detail hereinafter.

The information servers 2a and 2b provide information to the user's computers 1a and 1 c when requested. They will also provide receipts for the information as will be described in more detail hereinafter. Each information server 2a and 2b communicates with the central payment server 3 to initially register to join the service and thereafter to send information regarding the transactions to the central payment server 3. Further, index information on the information stored at the information server 2a and 2b and available to the user's computer 1a and 1c is passed to the central payment server 3 for the formation of a central index to be made available to users. Information servers 2a and 2b are provided with information on the users for whom the service is being suspended i.e. a barred account list.

The central payment server 3 also communicates with a credit card payment server in order to receive funds for settling a user's account.

A publisher's server 5 comprises a source of information content that is made available to the information servers 2a and 2b. The publisher's computer 5 communicates with the central payment server 3 in order to initially register to join the service and then to be able to check the publisher's account.

Thus as illustrated in Figure 1, the system of the present invention provides for the provision of information to the users from the information servers at a charge which is aggregated at a central payment server 3 in a user's account. A particular security feature of the embodiment of the present invention is that receipts for transactions are stored at the user's computer 1a and 1c to prevent a user having to pay again for information content for which they have already paid. These receipts can be reconciled with the transaction information stored and aggregated at a central payment server 3 in order to detect fraudulent transactions.

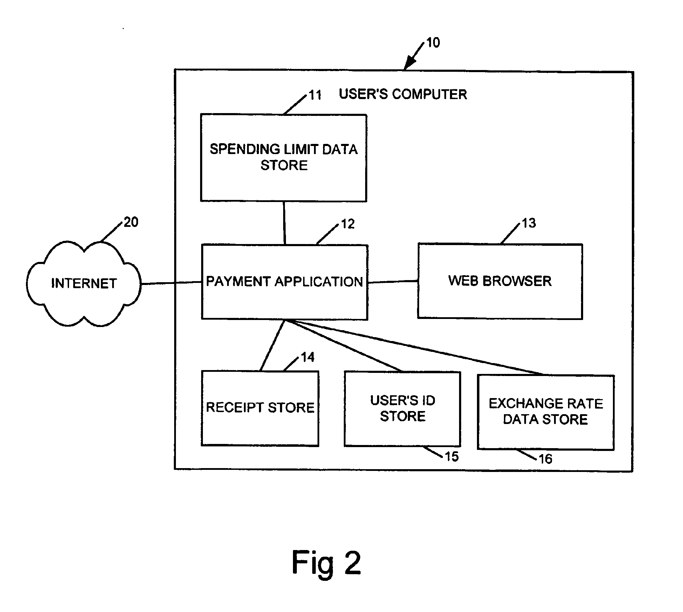

Figure 2 is a schematic functional diagram of a user's computer 10 used in the embodiment of the present invention illustrated in Figure 1 as the user's computer 1a, 1b or 1c.

The user's computer can comprise any processing apparatus which is connected to the Internet 20 for communication with the information servers 2a and 2b and the central payment server 3.

The user's computer 10 comprises a payment application 12 acting as an intermediary between a web browser 13 and the Internet 20. All communications to and from the web browser 13 are monitored by the payment application 12. Thus, the payment application 12 intercepts all hyper text transfer protocol (HTTP) requests from the web browser 13 and responses from the Internet 20. In this preferred embodiment, the payment application 12 is configured as a web proxy and the link between the payment application 12 and the web browser 13 is achieved by the web browser 13 being configured to access the web proxy over a local port.

The payment application 12 has access to spending limit data in a spending limit data store 11, receipt data in receipt store 14, the user's identification data in a user's ID store 15 and exchange rate data in an exchange rate data store 16. The use to which this data is put will be described in more detail hereinafter.

In this embodiment of the present invention, the user's computer 10 comprises a general purpose computer e.g. a personal computer configured with appropriate software comprising a web browser 13 and a payment application 12 with appropriate data stored in a data store such as a hard disk drive.

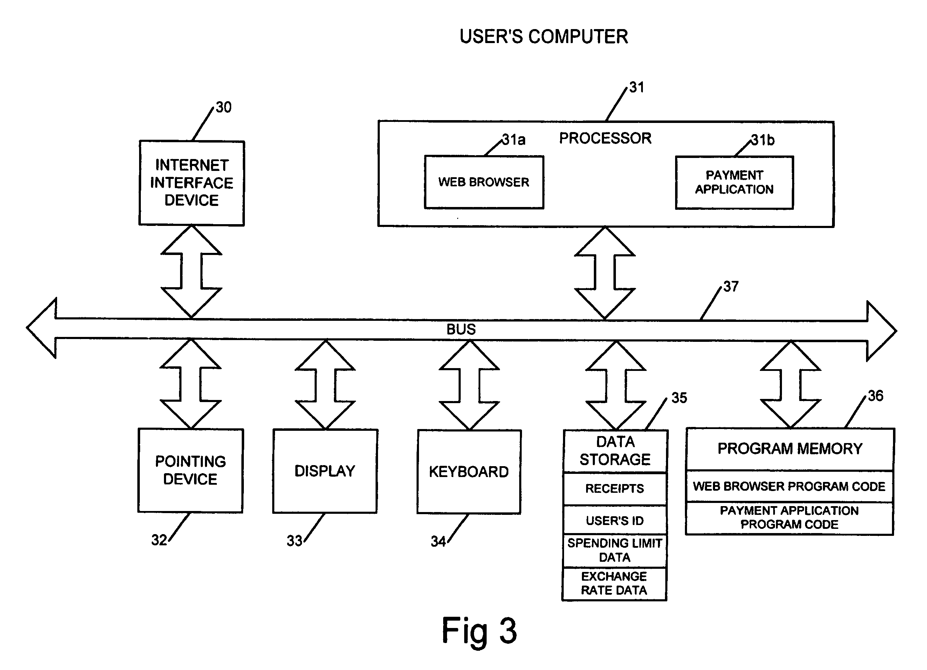

Figure 3 is a schematic diagram of the architecture of a user's computer in accordance with the embodiment of the present invention. The user's computer comprises a pointing device 32 e.g. a mouse, a display 33, and a keyboard 34. An Internet interface device 30 such as a modem or local area network interface is provided to connect the user's computer to the Internet 20. A program memory 36 e.g. a hard disk drive, CD ROM, floppy disk or programmable read only memory device is provided to store program code for controlling a processor 31 provided within the computer. The processor 31 operates to read the program code stored in the program memory 36 and to implement it. Web browser program code is read by the processor 31 to implement a web browser 31 a. Payment application program code is read from the program memory 36 to implement the payment application 31b. The data storage device 35 e.g. a hard disk drive, CD ROM or random access memory (RAM) stores data used by the processor 31 during implementation of the web browser 31 a and payment application 31 b. Specifically, receipts, the user's ID, spending limit data and exchange rate data are stored for use by the payment application 31b.

The components of the user's computer are interconnected by a control and data bus 37.

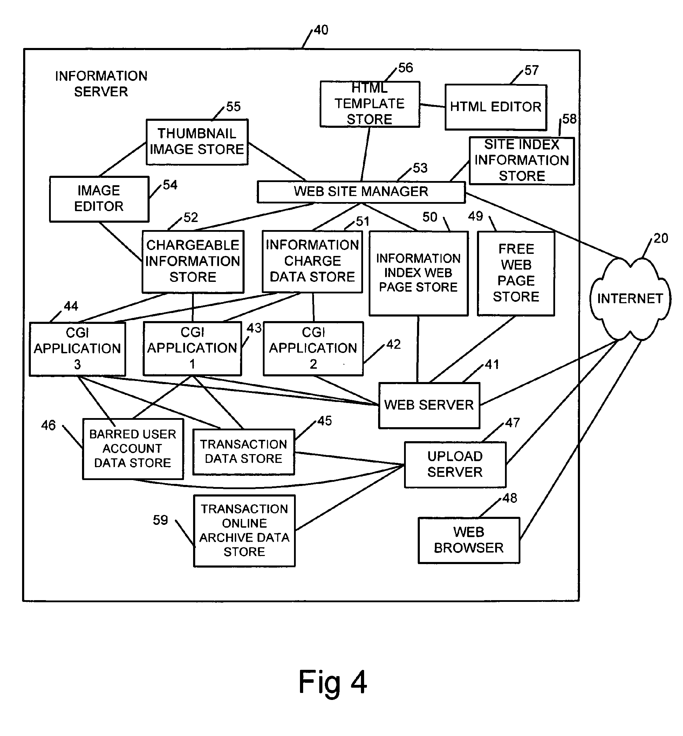

Figure 4 is a schematic functional diagram of an information server 40 in accordance with an embodiment of the present invention. Information server 40 is connected over the Internet 20 to user's computers and the central server.

A web server 41 is provided connected to the Internet 20 to provide access to free web pages stored in the free web page store 49. Web server 41 also provides access to information index web pages stored in an information index web page store 50. The web pages in the stores 49 and 50 can be accessed from the web server 41 using a conventional web browser. Operating in the background behind the web server 41 are three common gateway interface applications 42, 43 and 44 which receive information from the web server 41 using the common gateway interface (CGI) standard. Each of these applications performs specific functions as will be described in more detail hereinafter. The second CGI application 42 processes information in the information charge data store 51 in order to provide file identification information. The first CGI application 43 performs the main transaction function within the information server 40 and thus accesses a transaction data store 45 to store transaction information and has access to a barred user account data store 46 in order to determine whether a user requesting a transaction has been barred from using the service. The first CGI application 43 also has access to the information charge data store to determine charge information. The first CGI application 43 also has access to the chargeable information store 52 which contains the information which is requested by a user. Thus the first CGI application 43 not only stores transaction information but also responds with requested information for which there is a charge. The third CGI application 44 performs a subscription function as will be described in more detail hereinafter. This application has access to the transaction data store 45 in order to store subscription transactions and access to the barred user account data store 46 in order to determine whether the user requesting a subscription to information has been barred from the service. Also the third CGI application 44 has access to the information charge data store 51 in order to obtain chargeable information when users have subscription receipts.

An upload server 47 is provided in the information server 40 in order to upload transaction data in the transaction data store 45 over the Internet 20 to the remote payment server. A transaction online archive data store 59 is provided for the storage of transaction files after the transfer of the transaction file when the upload server 47 is polled, as will be described in more detail hereinafter. The information server 40 is also provided with a web browser 48 connected to the Internet 20 to be used by an operator of the information server 40 (i.e. a web master or administrator) in order to register the information server 40 (i.e. as a web site containing information available to users).

The information server 40 is also provided with a web site manager application 53 which is connected to the Internet 20 to enable index information in a site index information store 58 to be sent to the central payment server for the formation of a central index. The web site manager 53 performs the function of configuring and managing the information in the chargeable information store 52 made available to customers. Thus, the web site manager application 53 has access to the chargeable information store 52. The web site manager application generates and manages the information charge data in the information charge data store 51, index information in the site index information store 58, and the information index web pages in the information index web page store 50. For the generation of the information index web pages, the web site manager application 53 uses hyper text mark-up language (HTML) templates stored in the HTML template store 56. The HTML templates in the HTML template store are generated by an HTML editor 57.

The web site manager application 53 also has access to thumbnail images stored in a thumbnail image store 55. An image editor 54 accesses chargeable information in the chargeable information store 52 in order to generate the thumbnail images in the thumbnail image store 55. The thumbnail images in the thumbnail image store 55 are used for generating links for information by the web site manager 53 in the information index web pages which are stored in the information index web page store 50.

The information server 40 can be implemented using any suitable program processing apparatus.

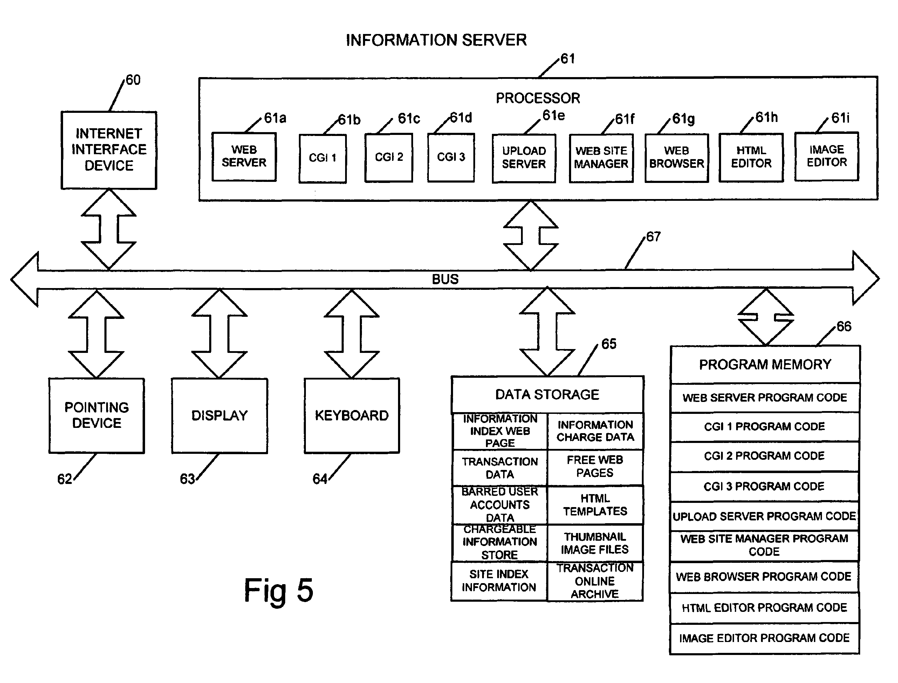

Figure 5 is a schematic diagram of the architecture of the information server in this embodiment of the present invention in which program code is implemented on a general purpose computer.

The information server 40 is provided with a pointing device 62, e.g. a mouse, a display 63 for outputting information to a user, and a keyboard 64 for inputting data. An Internet interface device 60 such as a modem or local area network interface is provided for interfacing the information server 40 to the Internet 20. A program memory 66 such as a hard disk drive, CD ROM, floppy disk drive, programmable memory device, or read only memory is provided for storing program code for controlling a processor 61 in the information server. The program memory 61 stores web server program code that is read and implemented by the processor 61 to implement a web server 61a. Program code for the three CGI applications is read and implemented by the processor 61 to implement the three CGI applications 61 b, 61 c and 61d. Upload server program code is read from the program memory 66 and implemented by the processor 61 to implement the upload server 61e. Web site manager program code is read from the program memory 66 and implemented by the processor 61 to implement the web site manager 61f. Web browser program code is read from the program memory 66 and implemented by the processor 61 to implement the web browser 61 g. HTML editor program code is read from the program memory 66 and implemented by the processor 61 to implement the HTML editor 61 h. Image editor program code is read from the program memory 66 and implemented by the processor 61 in order to implement the image editor 61 i.

The information server 40 is provided with a data storage device 65, e.g. a hard disk drive, CD ROM, floppy disk drive or random access memory (RAM) in order to store the data used by the processor 61 during the implementation of the program code read from the program memory 66. The data storage device 65 stores the information index web pages, the site index information, the information charge data, the transaction data, the free web pages, the barred user account data, the HTML templates, the chargeable information store and the thumbnail image files. All of the components of the information server are interconnected by a control and data bus 67.

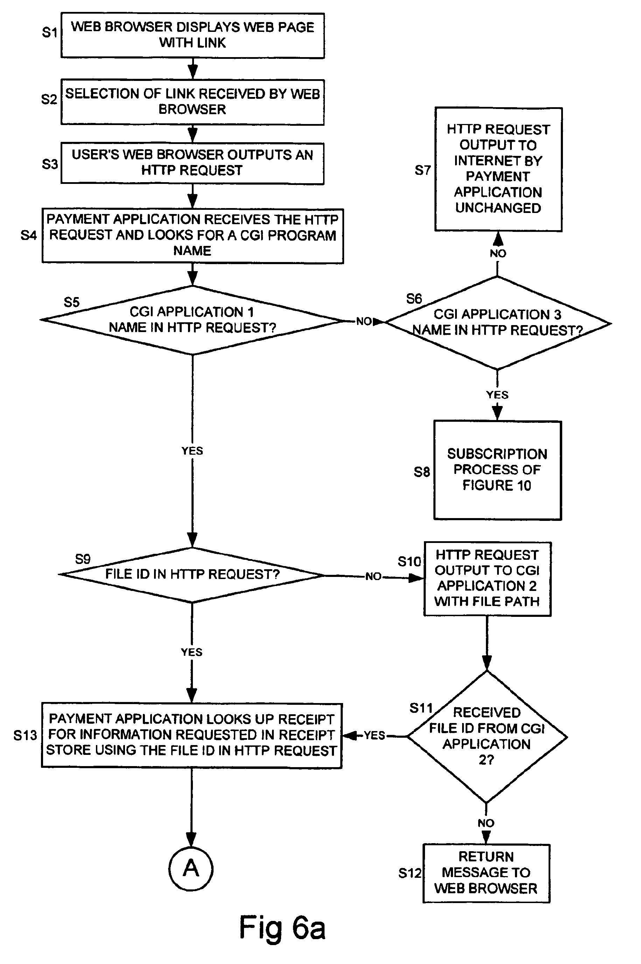

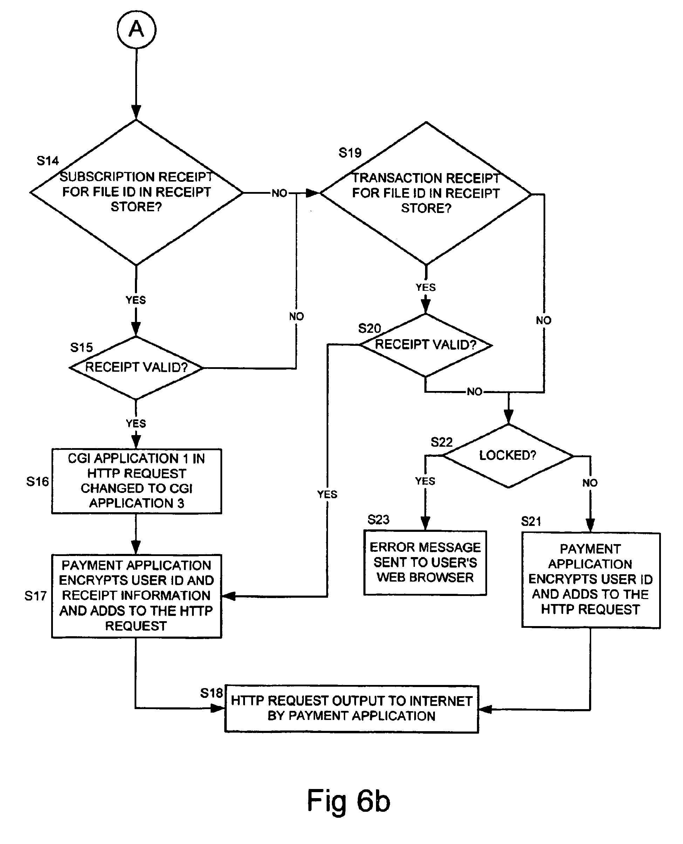

The operation of the use of the computer and the information server will now be described with reference to the flow diagrams of Figures 6 to 11.

Figures 6a and 6b comprise a flow diagram illustrating the steps implemented by the payment application when a request is received from the web browser 13 and the operation of the payment application 12 when receiving a request from the web browser will now be described.

The web browser 13 at the user's computer 10 accesses a web page which includes a link (step S1). The link is selected by the user (step S2) and the web browser 13 outputs a HTTP request to the information application 12 acting as a web proxy (step S3). The payment application 12 receives the HTTP request and looks in the request for a CGI program name (step S4). The HTTP request takes the form:
http:\\server.com\cgi-bin\cgi 1.exe?abc+def+ghi

In this HTTP request the part *server.com* identifies the domain name for the information server. The file path *cgi-bin* indicates that the part following identifies a CGI application. The file name *cgil.exe* identifies the CGI application. The parameters following the question mark and delimited by the plus signs comprise parameters passed to the CGI application.

In step S5 the payment application determines whether the CGI application comprises CGI application 1. If not, in step S6 the payment application determines whether the CGI application is the CGI application 3. If not, in step S7 the HTTP request is passed unchanged by the payment application 12 and output to the Internet 20 since it is not a request for chargeable information at an information server 40. It could be a request for free information available at free web pages at the information server 40 e.g. the request could be:
http:\\server.com\freepages.htm

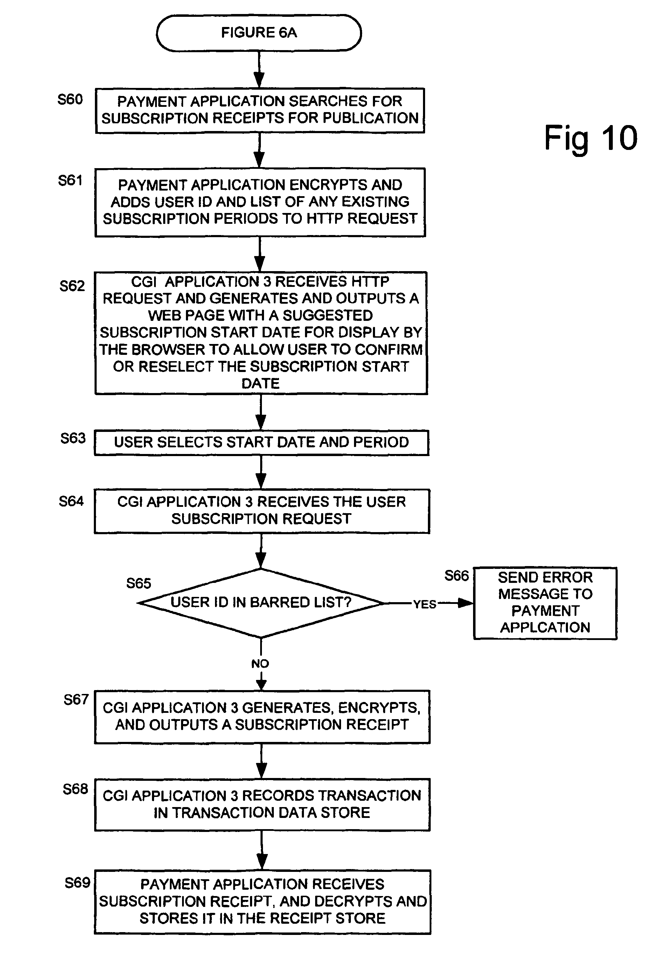

If in step S6 the payment application 12 determines that the CGI application name is the third CGI application, it is identified that this is a request for the subscription process to be implemented (step S8). This will be described in more detail hereinafter with reference to Figure 10.

If in step S5 it is identified that the name of CGI application is the first CGI application, the parameters following the CGI application file name are examined by the payment application to determine whether one of these parameters comprises a file identification (ID) number. At a minimum, the parameters must include a file path for the information requested. The file path can comprise both the file name e.g. 001.pdf (identifying page 1) and file path e.g. /magazines/PCW/1999/sept/ identifying the file path as the September issue of 1999 of the Personal Computer World magazine. The file ID parameter is composed of a content ID comprising a unique ID for the information, a publication ID comprising a unique ID for the publication to which the information belongs, and a master site ID identifying a site where the charging details of an original copy of the information are defined and the file ID is issued. This is provided since there can be copies of the information provided at mirror sites.

The format of the HTTP request received by the payment application 12 are defined by links inserted in web pages which can be accessed by the web browser. To request information content, the information index web pages stored in the information index web page store 50 at the information server 40 are accessed. The information index web pages are built to include links to chargeable information in the chargeable information store 52 and may or may not include the file ID. They must include the name of the first CGI application 43 and the domain name of the web server 41 as well as the file path for the chargeable information in the information store 52.

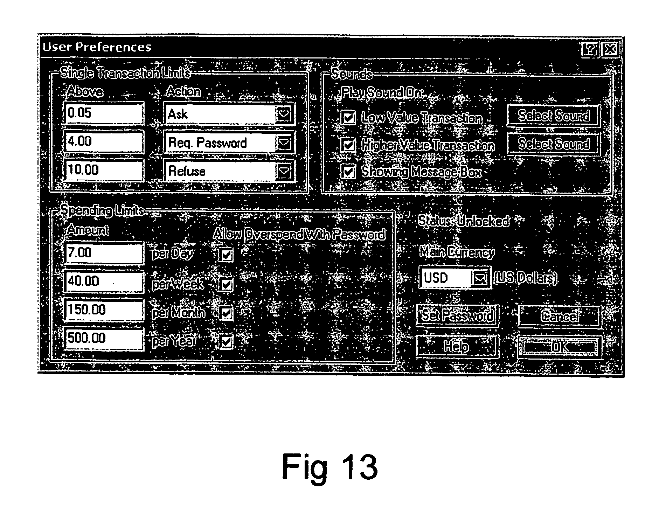

If in step S9 it is determined that the HTTP request includes the file ID, in step S13, the payment application 12 uses the file ID to look in the receipt store 14 to identify whether there is a receipt for the file ID. First a subscription receipt is looked for (step S 14) and if none is identified, in step S19 a transaction receipt is looked for. If no transaction receipt is identified and the payment application 12 has been locked by the user (step S22), an error message is sent to the user's browser (step S23) and the transaction is aborted. (The process of locking the payment application 12 will be described in more detail hereinafter with reference to figure 13). If no transaction receipt is identified and the payment application 12 has not been locked by the user, the payment application 12 reads the user's ID from the user's ID store 15, encrypts it, and adds it as one of the parameters to the HTTP request (step S21). The modified HTTP request is then output to the Internet 20 by the payment application 12 (step S 18). The modified HTTP request is directed to the first CGI application 43 in the information server 40 and includes with it the user ID and the file path of the requested chargeable information as the parameters after the question mark and delimited by a plus sign.

If in step S 19 a transaction receipt for the file ID is identified in the receipt store 14, a validation process (step S20) is performed on the receipt.

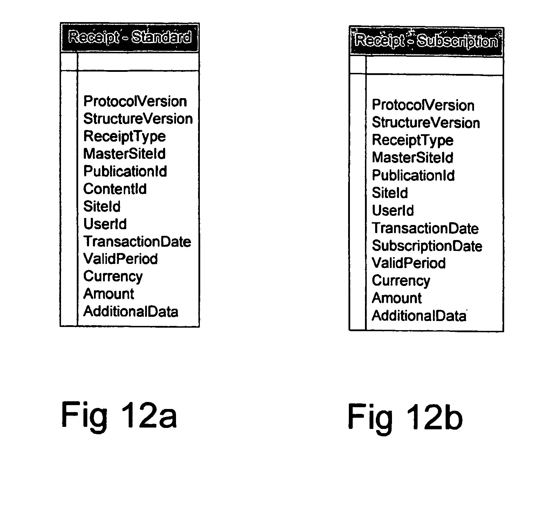

Figure 12a illustrates the structure of a transaction receipt. It comprises a number of parameters stored as a data structure. ProtocolVersion and Structure Version define version information to enable system and software upgrades. ReceiptType defines the type of receipt i.e. whether it is a transaction receipt or a subscription receipt. MasterSite Id identifies the original site where the particular piece of information was first made available. ContentId unique identifies the piece of information or content which has been previously requested and paid for by the user. SiteId identifies the site from which the information was retrieved. UserId comprises the user ID for the user requested the information. TransactionDate gives the date and time of generation of the transaction receipt. ValidPeriod defines the valid period of the transaction receipt. Currency defines the currency of the transaction e.g. dollars or pounds sterling. Amount defines the amount of the transaction. AdditionalData is a field containing additional information such as the path name of the information content. This field can also include check sums to facilitate detection of tampering with the receipt.

In order to perform the validation procedure (step S20) it is necessary to determine whether the current date and time provided by a system clock in the user's computer identifies a time which is later than the TransactionDate plus the ValidPeriod. In other words, it is determined whether the receipt has expired. This facility enables the operator of an information server to enable users to pay for and receive information without having to pay again for a period of time i.e. they are allowed free access to the information for a limited period. This period can be selected as desired by an information provider by setting the ValidPeriod field.

Thus, if as a result of the validation procedure (step S20), it is determined that the receipt has expired, the receipt is ignored and if the payment application 12 has been locked by the user (step S22), an error message is sent to the user's browser (step S23) and the transaction is aborted. If the receipt is ignored and the payment application 12 has not been locked by the user, in step S21 the payment application 12 encrypts the user ID and adds it to the HTTP request as if there was no transaction receipt. The modified request is then output to the Internet 20 by the payment application 12 (step S18).

If the validation procedure (step S20) identifies that the transaction receipt is valid, the payment application 12 reads the user ID from the user's ID store 15, encrypts it and the receipt information and adds the encrypted information to the HTTP request. The modified HTTP request is then output to the Internet 20 by the payment application 12.

The modifications made to the HTTP request comprise the addition of parameters after the question mark sign and delimited by the plus signs. HTTP requests must be formed of ASCII characters. Thus following the encryption process, which is required to provide a level of security, the encrypted information must be converted to ASCII characters. One well known technique for doing this is UU encoding.

The payment application therefore outputs the HTTP request directed to the first CGI application 43 if there is no subscription receipt or transaction receipt, or if there is a transaction receipt.

The format of the subscription receipt is very similar to that of the transaction receipt and is illustrated in Figure 12b. ReceiptType will identify the receipt as a subscription receipt. Unlike the transaction receipt, there is no ContentID identifying a specific piece of information content since the subscription receipt applies to a whole range of pieces of information provided under a PublicationID. The subscription receipt includes an additional field SubscriptionDate giving the date of the start of the subscription. TransactionDate identifies the date and time at which the subscription was taken out. This can be different to the subscription date. ValidPeriod defines the subscription period with the subscription date. Currency and Amount define the currency and amount of the subscription.

If the payment server identifies that there is a subscription receipt for a file ID in the receipt store 14 (step S 14), a validation process is carried out (step S 15). In order to perform the validation process, the HTTP request includes an additional parameter identifying the publication date of the information content which is the subject of the request. Thus the validation procedure (step S 15) can compare the publication date with the subscription date and the valid period to determine whether the publication date falls within a subscription period i.e. between the subscription date and the term comprising the sum of the subscription date and the valid period. If it is determined that the subscription receipt is not valid to allow free retrieval of the information (step S 15), the payment application 12 then looks for a transaction receipt for the file ID in the receipt store 14 (step S19).

If the validation procedure (step S 15) determines that the subscription receipt is valid for the requested information, the HTTP request is modified by changing the name of the CGI application from the first CGI application to the third CGI application (step S16). Then, the payment application 12 reads the user ID from the user's ID store 15, encrypts it and the subscription receipt information, UU encodes it and adds it to the HTTP request (step S 17). The HTTP request is then output to the Internet 20 by the payment application 12 (step S18).

Thus the third CGI application 44 in the information server 40 receives and responds to requests for chargeable information for which the user's computer has stored a valid subscription receipt.

As mentioned hereinabove, the links provided in the information index web page stored in the information index web page store 50 need not include the file IDs. This is to enable links to be provided within PDF files for example without requiring significant modifications to the PDF files by the inclusion of unique file IDs. Therefore, when the payment application receives the HTTP request identifying the first CGI application, if there is no file ID in the HTTP request (step S9), an HTTP request is output by the payment application 12 to the second CGI application 42 with the file path. In this way the payment application 12 does not pass on the first HTTP request from the web server 13. This is held whilst a second request is generated to the second CGI application 42 in order to obtain the file ID. If the file ID is not returned from the second CGI application 42 (step S11), a message is returned to the web browser 13 (step S 12) to indicate that the information cannot be retrieved. If the file ID is returned from the second CGI application 42 (step S 12), the payment application 12 uses the file ID to look up receipts for the requested information in the receipt store 14 (step S13) and the process continues as if the file ID had been received in the HTTP request from the web browser 13.

Thus the second CGI application 42 in the information server 40 is provided to use the information available in the information charge data store to obtain the file ID for the payment application. It can also provide the publication date (for subscription receipt validation as described above) and cost and currency information (for spending limit control as will be described in more detail hereinafter). Thus the second CGI application 42 can provide all these parameters to the payment application 12 using the file path if they are not in the HTTP request from the web browser 13 i.e. not in the links provided in the index web page.

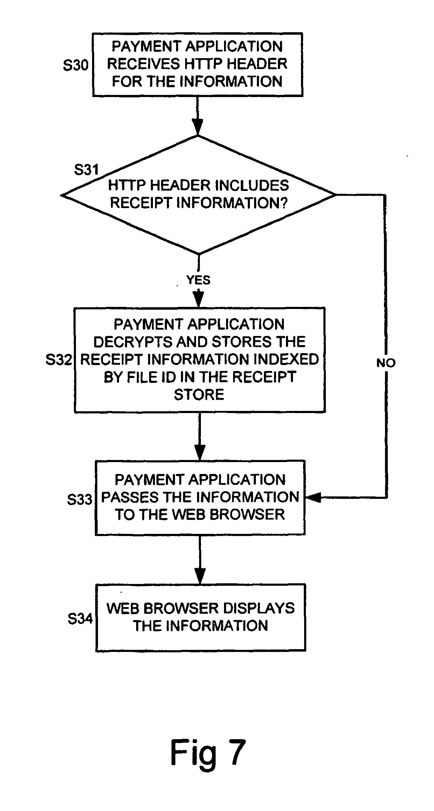

The operation of the payment application when a HTTP response is received will now be described with reference to the flow diagram of Figure 7.

The payment application 12 receives the HTTP header for the information (step S30) and it identifies whether the HTTP header includes receipt information (step S31). If receipt information is included, it must first be UU decoded and then decrypted before being stored in the receipt store 14 indexed by the file ID (step S32). The payment application 12 then passes the information received from either the first CGI application 43 or the third CGI application 44 via the web server 41 to the web browser 13 (step S33). Thus when a user has been charged for information retrieval, a transaction is recorded and a receipt stored at the user's computer 10 in the receipt store 14. If the user has previously paid for the information and a valid receipt is stored, there is no transaction since there is no payment and thus there is no transaction receipt received in step S31 and the payment application 12 simply passes the information to the web browser 13 (step S33). The web browser 13 then displays the information to the user (step S34).

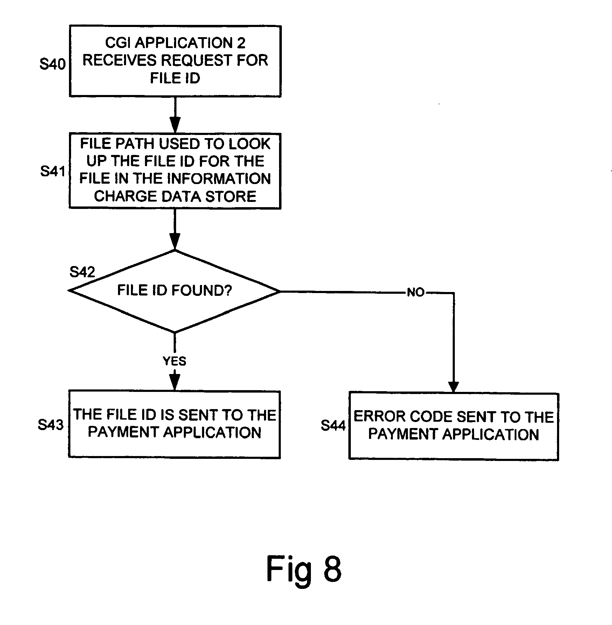

The operation of the second CGI application 42 at the information server 40 will now be described with reference to the flow diagram of Figure 8.

The second CGI application 42 receives HTTP requests from the payment application 12 which include a file path for chargeable information (step S40). The second CGI application 42 uses the file path in the HTTP request to look up the file ID (and publication date, cost and currency) for the information (file) in the information charge data store 51 (step S41). If a file ID is found (step S42) the file ID is sent as the HTTP response to the payment application 12 via the web server 41 (step S43). If a file ID is not found by the second CGI application 42 (step S42) an error code is sent to the payment application 12 via the web server 41 (step S44).

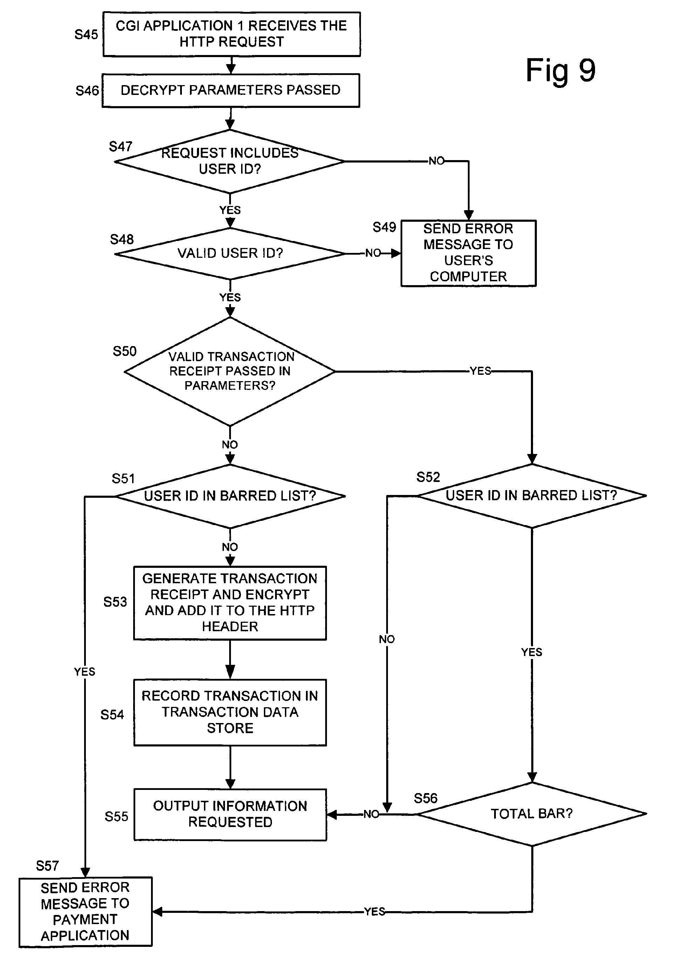

The operation of the first CGI application 43 at the information server 40 will now be described with reference to the flow diagram of Figure 9.

The first CGI application 43 receives HTTP requests from the payment application 12 via the web server 41 (step S45). The first CGI application 43 UU decodes parameters passed with the HTTP request and decrypts them (step S46). The first CGI application 43 then determines whether the request includes a user ID (step S47). If not, an error message is sent to the user's web browser or payment application (step S49) (a missing user ID is indicative of the user attempting to obtain chargeable information directly rather than via the payment application 12). If the first CGI application 43 identifies that the request does include a user ID (step S47), it determines whether the user ID is of valid form (step S48). If it is determined that the user ID is not of valid form (step S48), an error message is sent to the requesting web browser or payment application (step S49) (an invalid user ID is indicative of the user attempting to obtain chargeable information by unauthorized means and not through the payment application 12). If the user ID is valid, the first CGI application 43 determines whether a valid receipt is passed in the parameters (step S50). This process comprises the identification of a valid transaction receipt data structure and a validation determination. The validation determination comprises determining whether the receipt is still valid by determining the current date and time from the information server's internal clock and comparing this with the transaction date plus the valid period. This will identify whether the receipt is still valid. If it is determined that the transaction receipt is valid, the first CGI application 43 then looks in the barred user account data store 46 to determine whether the user ID identifies a user that has been barred from using the service (step S52). If a barred user is identified by the user ID, and the bar is determined to be total (step S56) an error message is sent to the payment application. 12 (step S57). If a barred user is identified by the user ID, and the bar is determined not to be total (step S56), i.e. the user is barred only from further purchase using the system, the requested information is retrieved from the chargeable information store 52 and output via the web server 41 over the Internet 20 to the payment application 12 (step S55). If a barred user is not identified (step S52), the requested information is retrieved from the chargeable information store 52 and output via the web server 41 over the Internet 20 to the payment application 12 (step S55). If it is determined that the transaction receipt is not valid, i.e. it has expired, the first CGI application 43 then looks in the barred user account data store 46 to determine whether the user ID identifies a user that has barred from using the service (step S51). If the user has been either barred totally or barred from further purchase using the system an error message is sent to the payment application 12 (step S57). If the user is not barred the first CGI application 43 generates a new transaction receipt by retrieving information from the information charge data store 51 using the file path for the requested chargeable information and using the user ID. The generated transaction receipt is then encrypted to provide a level of security, UU encoded and added to the HTTP header (step S53). Since the generation of a transaction receipt means that the user will be charged for the retrieval of the information, a record of the transaction is recorded in the transaction data store 45 (step S54). Information on the cost and currency for the transaction is available from the information charge data store 51 which stores information on the cost i.e. currency and amount for retrieval of information. The information charge data store 51 will also include the master site ID, the publication ID, the content ID, and the valid period for the information content requested. In other words, the information charge data store 51 contains all of the information for generating a valid receipt and for forming transaction data for storing in the transaction data store 45. Thus, the transaction data store 45 forms a record of all transactions by all users. In this way the transaction data store 45 contains information which can be compared with receipt data stored at the user's computer 10 in order to perform a level of confirmation of the validity of transactions both at the information server 40 and at the user's computer 10. Once the transaction has been recorded in the transaction data store 45 (step S54), the information requested by the payment application 12 is output via the web server 41 over the Internet 20 to the payment application 12 (step S55).

The method of subscribing to a publication will now be described with reference to the flow diagram of Figure 10. The flow diagram of Figure 10 follows on from step S8 in Figure 6a.

At the information server 40 in addition to information index web pages stored in the information index web page store 50, subscription index web pages are provided which contain links to the third CGI application 44 with parameters comprising the publication ID identifying the publication to which the user wishes to subscribe.

The payment application 12 searches receipt store 14 (step S60) for subscription receipts for the publication. The payment application 12 takes the user ID read from the user's ID store 15 together with a list of any subscription receipt dates and periods found in step S60, encrypts, UU encodes and adds these to the HTTP request (step S61). The third CGI application 44 receives the HTTP request via the web server 41 and by reference to publication issue publication dates in data store 51 calculates a suggested subscription start date and list of alternative start dates and generates and outputs a web page (step 62) for display by the web browser 13 at the user's computer 10 to allow the user to confirm the suggested subscription start date or select another start date and also select a subscription period (step S63). The third CGI application 44 receives the HTTP request for a subscription start date and period (step 64) and uses the user ID to look into the barred user account store 46 to determine whether the user has been barred from purchasing using the service (65). If it has been determined that the user has been barred from purchasing using the service an error message is sent to the payment application 12 (step 66). If it has been determined that the user has not been barred from purchasing using the service the third CGI application 44 can then generate, encrypt, UU encode and output a subscription receipt of the form shown in Figure 12b to the payment application 12 (step S67). The third CGI application 44 then records the transaction in the transaction data store 45 (step S68). The payment application 12 receives the subscription receipt, UU decodes it, decrypts it and stores it in the receipt store 14 (step 69).

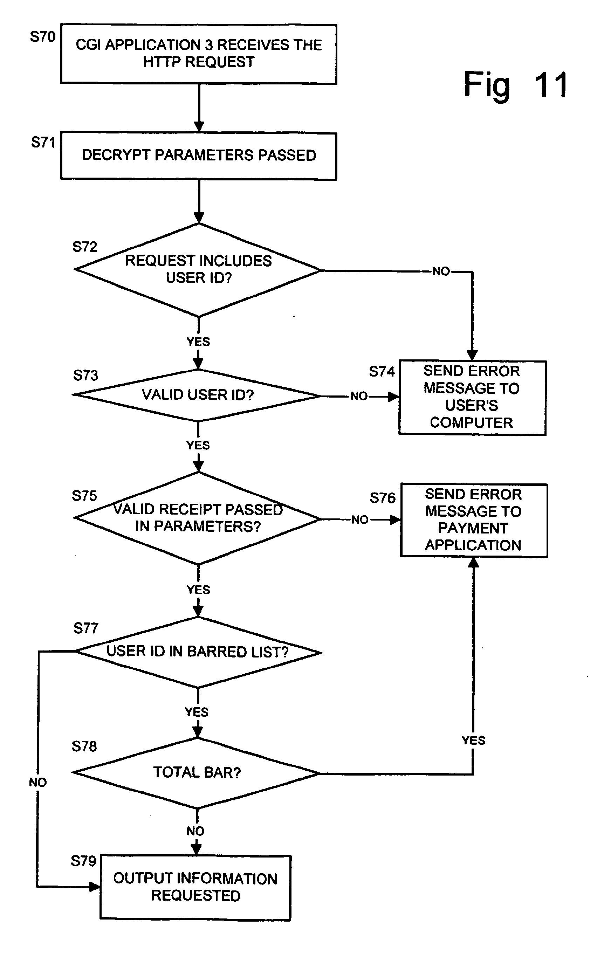

The operation of the third CGI application 44 in response to an HTTP request for information will now be described with reference to the flow diagram of Figure 11. The third CGI application 44 receives an HTTP request for information when the payment application 12 identifies that there is a valid subscription receipt. Thus, the third CGI application receives the HTTP request (step S70). Parameters passed in the HTTP request are UU decoded and decrypted (step S71). The third CGI application 44 then determines whether the request includes a user ID (step S72). If not, an error message is sent to the user's browser or payment application (step S74) (a missing user ID is indicative of the user attempting to obtain chargeable information directly rather than via the payment application 12). If the third CGI application 44 identifies that the request does include a user ID (step S72), it determines whether the user ID is of valid form (step S73). If it is determined that the user ID is not of valid form (step S73), an error message is sent to the web browser or payment application (step S74) (an invalid user ID is indicative of the user attempting to obtain chargeable information by unauthorized means and not through the payment application 12). If the user ID is determined to be of valid form (step S73), the third CGI application 44 determines whether a valid subscription receipt is passed in the parameters (step S75). This validation process uses a publication date of the requested information passed as a parameter with the HTTP request to determine whether the requested information is within the subscription period i.e. within the period defined by the sum of the subscription date and the valid period. If the receipt is determined not to be valid, the third CGI application 44 sends an error message to the payment application 12 (step S76). If the receipt is determined to be valid, the third CGI application 44 uses the user ID to look into the barred user account data store 46 (step 77) to determine whether the corresponding user has been completely barred from using the service (step 78) (as opposed to being barred from purchasing using the service). If it is determined that the user has been completely barred from using the service, an error message is sent to the payment application 12 (step S76). If it is determined that the user ID is not in the barred user list (step S77) or the user has not been completely barred from using the service (step S78), the information is output as requested (step 79).

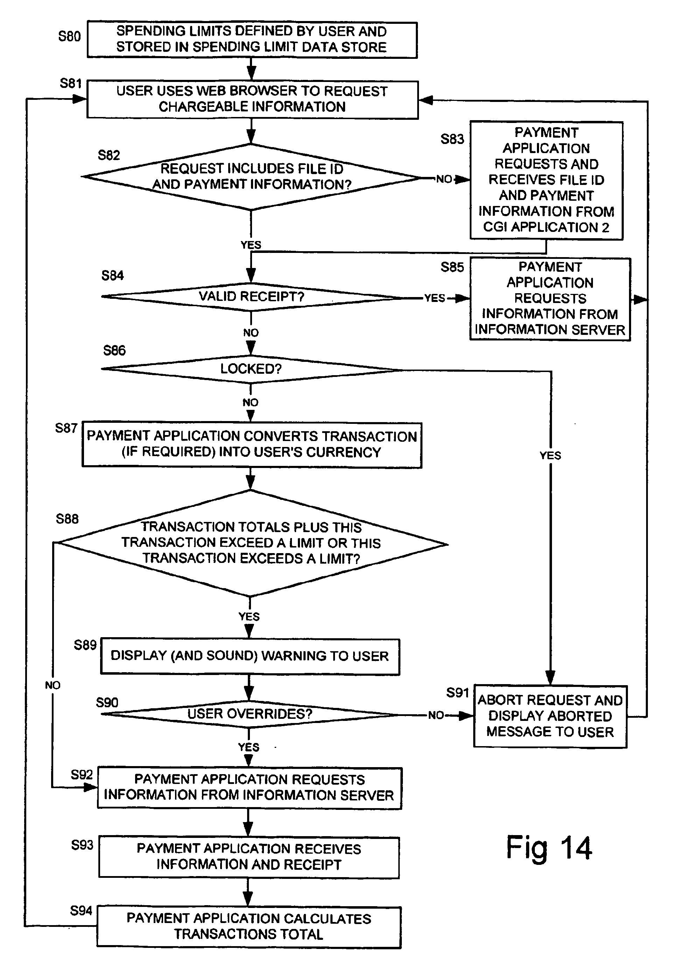

The ability of the payment application 12 in the user's computer 10 to control spending on products requested by the web browser 13 will now be described with reference to Figures 13 and 14.

When an HTTP request is received for a product, the request includes the identification of the first CGI application 43 and the file path of the file requested. If the information index web pages have been set up to include further information, then the HTTP request will include the file ID, publication date, cost and currency for the information. Alternatively, this further information of the file ID, publication date, cost and currency can be obtained by sending the file path to the second CGI application 42 in order for the second CGI application 42 to look up the information in the information charge data store 51. If the request from the web browser 30 is a request for subscription to a publication, the request will identify the third CGI application 44. The HTTP request will include a publication ID, publication date, valid period, cost and currency for subscription to the publication. Thus, for a subscription the content ID is blank in the file ID since this is not required.

The payment application 12 thus receives information on the cost of the requested information or requested subscription and the currency. This is either received in the request or from the second CGI application 42. The receipt of the cost and currency information with the request before it is sent to the information server enables the payment application 12 to perform cost monitoring and to prevent overspending by the user. To provide this facility, the payment application 12 is provided with a graphical user interface which can be accessed by a user and is illustrated in Figure 13. When the payment application 12 is implemented on the user's computer 10 in this embodiment in which it is implemented in a Microsoft Windows 95, 98, 2000 or NT (trade mark) operating system environment, an item for the payment application appears in the task bar. When a user right clicks on the item, a menu is displayed to enable a user to select to lock the payment application 12. This prevents new spending using the payment application until the payment application is unlocked. It does not however prevent the user obtaining information for which they have already paid and for which they have a valid receipt. Thus the locking acts as a means of controlling spending. The unlocking of the payment application requires the user to input a password that is selected using the window displayed in figure 13. The user is also able to select to display the window shown in figure 13 from the displayed menu. This allows further spending control.

As can be seen in Figure 13, various spending limit related parameters can be set and are stored in the spending limit data store 13 to be used in the monitoring of spending by the user. There are two types of spending limits that can be set by the user. There is a single transaction limit that sets a limit for an individual transaction. As can be seen in Figure 13, there are three levels of response or action for three different setable levels of spending. In this example, for each single transaction above 0.05 dollars, the action is to ask the user to confirm that the transaction is to go ahead. For transactions above 4 dollars, the user is required to enter a password to authorise the transaction to proceed. Transactions above 10 dollars are refused and will not be permitted. The second type of spending limit is a spending limit per period. In this embodiment, there are four spending limit periods which can be set. In this example, there is a spending limit set of 7 dollars per day, 40 dollars per week, 150 dollars per month and 500 dollars per year. The user can elect to permit overriding of a periodic spending limit upon entry of the password by checking the checkbox adjacent to the limit in question. The user is also able to select the user's main currency that in this case is set to US dollars. This selection of currency selects the user's home currency relevant for the spending limits. A sound to be played upon making a small expenditure can be selected. This is played when the transaction is less than or equal to the lowest single transaction spending limit. A sound to be played upon making a larger expenditure can be selected. This is played when the transaction is greater than the lowest single transaction spending limit. The user can elect to play a sound when the payment application displays a message. The use can set the password the payment application requires for access restriction and overriding spending limits.

Once a user has entered all the user preferences for the spending limit data and clicked on the OK button, the spending limit data is stored in the spending limit data store for use in the control of spending limits by the user by monitoring the cost and currency of each individual transaction or subscription transaction as each request is received from the web browser 13 by the payment application 12.

Figure 14 is a flow diagram illustrating the method of controlling spending by the user. As described hereinabove, the spending limits are defined by the user and stored in the spending limit data store (step S80). When the user uses a browser to request chargeable information (step S81) the payment application determines whether the request includes the file ID and payment information (step S82). If not, the payment application 12 requests and receives the file ID and payment information from the second CGI application 42 at the information server 40 (step S83). Now that the payment application 12 has the file ID, it can determine whether there is a valid receipt stored in the receipt store 14. First of all it determines whether there is any receipt at all i.e. a transaction receipt or a subscription receipt, and if so it then determines whether the receipt has expired. If there is a receipt and it is valid, the payment application requests the information from the information server 40 and sends the receipt as proof of payment (step S85). Thus when there is a valid receipt, there is no need to instigate a spending limit control function since the user does not pay again for the information.

If there is no receipt or the receipt is invalid (step S84) and the payment application has been locked by the user (step S86), i.e. spending is suspended, an error message is sent by the payment application to the user's browser (step S91). If there is no receipt or the receipt is invalid (step S84) and the application has not been locked by the user (step S86), the payment application converts the cost of the transaction into the user's currency if this is necessary using the exchange rate data stored in the exchange rate data store (step S87). The payment application 12 is thus now able to compare the requested transaction with the stored spending limit data in the spending limit data store 11 (step S88). If the transaction totals for all previous transactions plus the requested transaction exceeds one of the spending limits, or if the transaction exceeds one of the single transaction limits, a warning is output to the user in the form of a display and optionally a sound (step S89). Since the two lower single transactions and the spending limits for periods can be overridden, either with a password or simply be confirming (step S90), it is possible for a user to override the warning. If the user does not override, the request is aborted and a display is output to the user to inform them that the request has been aborted (step S91). If the user overrides the spending limit warning (step S90), the payment application transmits the request for information to the information server 40 (step S92). The payment application 12 then receives the information and a transaction receipt from the information server (step S93) then calculates new transactions totals for the spending limits per period (step S94). The transactions totals are stored in the spending limit data store 11 together with the spending limits to be used in step S88 for the determination of whether the next request for chargeable information will exceed the spending limits per period. The payment application 12 then awaits the receipt of the next request for chargeable information (step S81).

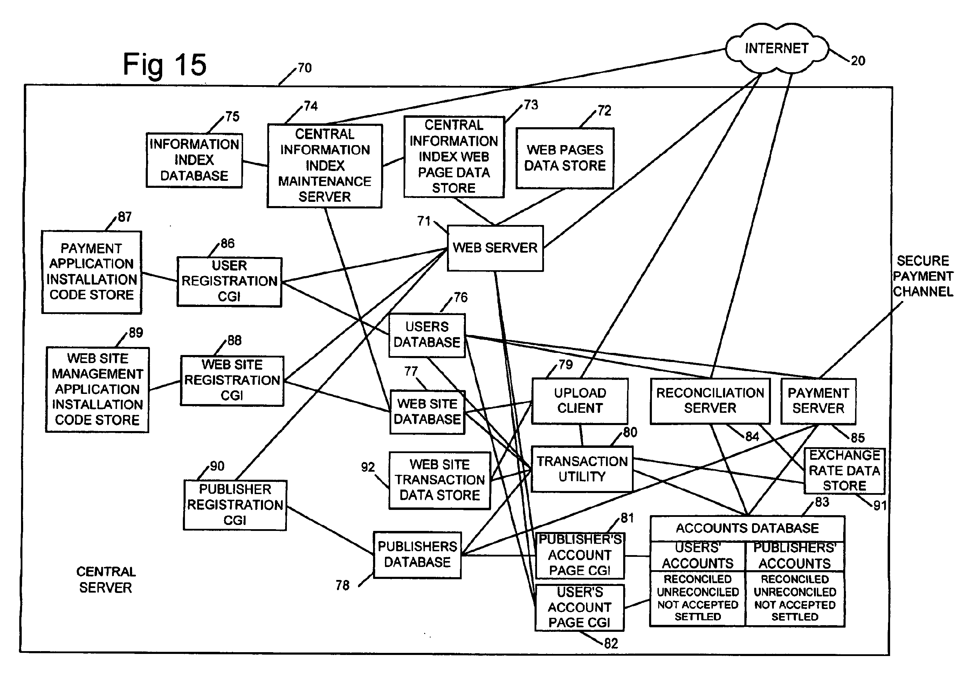

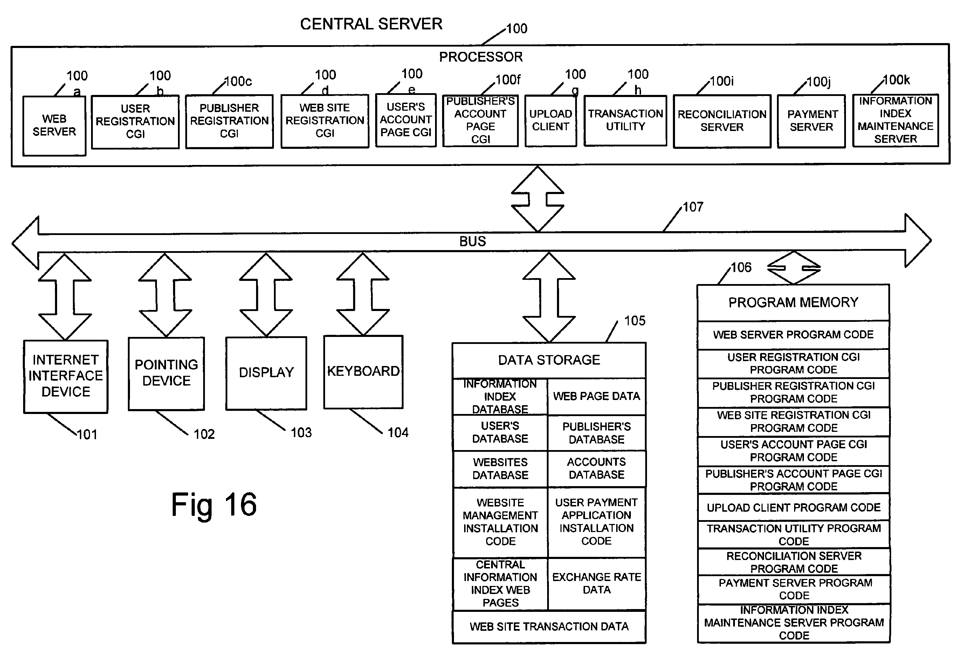

The central server will now be described with reference to Figures 15 and 16.

Figure 15 is a schematic functional diagram of the central server 70. The central server is provided with a web server 71 connected to the Internet 20 to allow users, web site (information server) administrators or web masters, and publishers of information access to the services provided by the central server 70. The central server 70 thus stores web pages in a web page data store 72 which are freely available. Also, central information index web pages are stored in a central information index web page store 73 to provide a central index of information available at all subscribing information servers 40. A central information index maintenance server 74 is provided connected over the Internet 20 for obtaining index information from information servers 40 and for maintaining and updating the central information index web pages in the central information index web page data store 73. The central information index maintenance server 74 refers to and updates an information index database 75 which stores the index information for all information servers 40 which are party to the service. The central information index maintenance server 74 also accesses a web site (information server) database 77 that stores information on all of the subscribing information servers 40. The central server 70 also stores a users' database 76 storing information on all subscribing users. There is also provided a publishers database 78 storing all information on subscribing publishers. Three applications 86, 88 and 90 are provided for registering users, web sites (information servers) and publishers respectively. A user's registration CGI 86 is implemented via the web server 71 to register users in the user's database 76 and to allow users to download payment application installation code from a payment application installation code store 87. A web site registration CGI 88 is provided to allow web site (information server) administrators to register the web site with the service as a site where chargeable information can be downloaded. The web site registration CGI 88 stores the registration information in the web site database 77. Web site registration CGI 88 also enables the administrator to download the web site management application installation code from the web site management application installation code store 89 via the web server 71. The publisher registration CGI 90 enables publishers of information to register with the service when they have made information available at web sites. A publisher need not host their own web site and can instead provide the published information to web sites (information servers) so that it can be accessed by users. The publisher registration CGI 90 stores the registration information for publishers in the publishers' database 78.

An upload client 79 is provided in the central server 70 for receiving information from the upload server 47 over the Internet 20. This enables the periodic polling of information servers 40 to retrieve transaction data from respective transaction data stores 45. The uploaded transaction data files are stored in a website transaction data store 92. A transaction utility 80 is provided connected to the upload client 79 to process the retrieved transaction data in the website transaction data store 92. The transaction data is entered into an accounts database 83 that stores respective records for users and publishers. Each of the publishers' accounts and users' accounts contain transactions that are reconciled, unreconciled, not accepted, or settled as will be described in more detail hereinafter. The upload client 79 uses information on the location of the web sites from the web site database 77 in order to carry out the polling operation in order to contact respective upload servers 47. Also the transaction utility 80 uses information in the web site database 77, information in the users' database 76 and information in the publishers' database 78 in order to process the transactions to credit the appropriate transactions to the appropriate users and publishers.

The central server 70 is also provided with a reconciliation server 84 connected over the Internet 20 to enable the reconciliation server 84 to connect to payment application 12 in users' computers 10. The reconciliation server 84 is periodically contacted by payment applications 12 in order to perform a reconciliation process on the receipts stored in the receipt store 14 at the user's computer 10 with transaction information for the user obtained from the user's account in the account database 83 and transaction data stored in the web site transaction data store 92. The reconciliation server 84 also accesses the user's database 76 in order to facilitate the reconciliation process and an exchange rate data store 91 to provide exchange rate data to the payment application 12.

Central server 70 is further provided with a payment server 85 for making payments over a secure payment channel to publishers' accounts and for receiving payments over the secure payment channel from users accounts, e.g. a remote credit card server 4. The payment server 85 thus accesses the account database 83, the users database 76 and the publishers database 78 in order to facilitate the payment operation.

The central server 70 is further provided with a publishers account page CGI 81 and a users account page CGI 82 accessing the accounts database 83 to allow publishers and users respectively to access their account information via the Internet 20 and the web server 71 so that they can inspect their accounts. The publishers account page CGI 81 accesses the publishers' database 78 in order to facilitate the interface to the publisher, and the users account page CGI 82 accesses the users database 76 in order to facilitate the interface to the user.

The central server 70 can be implemented on any suitable processing apparatus implementing computer programs. Figure 16 is a schematic diagram of the structure of the central server 70 in accordance with this embodiment of the present invention that is implemented on a general purpose computer. The central server 70 has a pointing device 102 e.g. a mouse, a display 103, and a keyboard 104. An Internet interface device 101 is provided to enable connection to the Internet 20. The Internet interface device 101 can comprise a modem but will normally comprise a permanent network connection device such as a local area network card. A program memory 106 e.g. a hard disk drive, CD ROM, a floppy disk drive or programmable read only memory device such as a solid state memory device is provided to store program code which is readable and implementable by a processor 100. The processor 100 reads web server program code from the program memory 106 and implements a web server 100a. The processor 100 reads user registration CGI program code from the program memory 106 and implements the user registration CGI 100b. Publisher registration CGI program code is read by the processor 100 from the program memory 106 to implement a publisher registration CGI 100c. Web site registration CGI program code is read from the program memory 106 by the processor 100 to implement a web site registration CGI 100d. Users account page CGI program code is read from the program memory 106 by the processor 100 to implement the users account page CGI 100e. Publisher account page CGI program code is read from the program memory 106 by the processor 100 to implement the publishers account page CGI 100f. Upload client program code is read from the program memory 106 by the processor 100 to implement the upload client 100g. Transaction utility program code is read from the program memory 106 by the processor 100 to implement the transaction utility 100h. Reconciliation server program code is read from the program memory 106 by the processor 100 to implement a reconciliation server 1 00i. Payment server program code is read from the program memory 106 by the processor 100 to implement a payment server 100j. Information index maintenance server program code is read from the program memory 106 by the processor 100 to implement an information index maintenance server 100k.

A storage device 105 e.g. a hard disk drive, floppy disk drive, CD ROM or random access memory (RAM) is provided to store data used by the processor 100 in the central server 70. Although the data storage device 105 is shown as a single data storage device, this device can of course be provided as a multitude of storage devices e.g. a number of hard disk drives. The data storage device 105 stores the information index database, the exchange rate data, the users database, the web site database, the web page data, the publishers database, the accounts database, the web site management installation code, the user payment application installation code, the central information index web pages, and the web site transaction data.

All the components of the central server 70 are interconnected by a control and data bus 107.

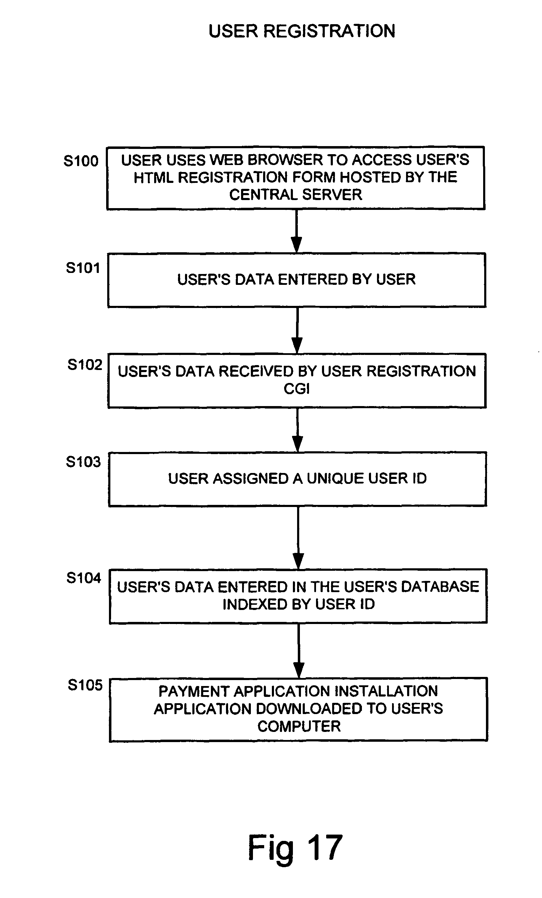

The functions performed by the central server 70 will now be described in more detail with reference to the flow diagrams of Figures 17 to 21.

Before a user is able to use a service, they must first register and this process is illustrated in the flow diagram of Figure 17. A user uses their web browser 13 to connect to the web server 71 over the Internet 20 in order to access the user registration form (step S100). The user enters the necessary registration data (step S101). The user registration CGI 86 receives the registration form data (step 102) and assigns the user a unique ID (step S103). The user's data is then entered into the users' database 76 by the user registration CGI 86 and the data is indexed by the user's ID (step S104). The user registration CGI 86 then downloads to the user's computer 10 the payment application installation code stored in the payment application installation code store 87 (step S105). The payment application installation application can then be executed by the user in order to install the payment application 12 on the user's computer 10. The installation process will also store the user's unique ID in a user's ID store 15 e.g. the hard disk drive of the user's computer 10. The user's computer 10 is thus ready to use the service. Initially, the receipt store 14 is empty since there have been no previous transactions. The user can access the spending limit interface in order to enter spending limit data into the spending limit data store. The receipts store 14 and the spending limit data store can comprise segments of the hard disk of the user's computer. The exchange rate data can be periodically downloaded to the user's computer for storage in the exchange rate data store 16 by the central server 70. This can take place during the reconciliation process performed by the reconciliation server 84 and will be described in more detail hereinafter.

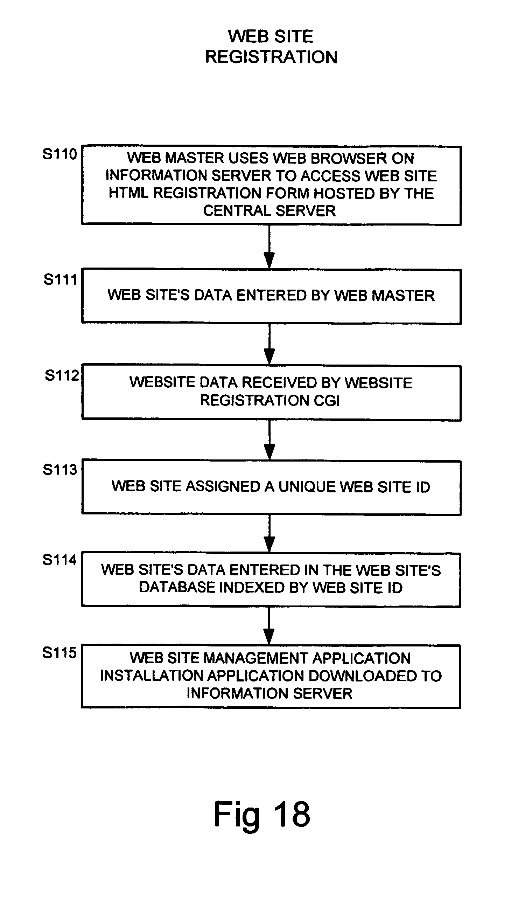

The process of registering a web site (information server) will now be described with reference to the flow diagram of Figure 18. A web master or administrator of the web site (information server) uses the web browser 48 on the information server 40 to access the web server 71 over the Internet 20 to gain access to the web site HTML registration form hosted at the central server 70 (step S110). The web master enters the web site's data in the HTML registration form (step S111). The registration form data is sent to the web site registration CGI 88 (step S112). The web site registration CGI 88 then assigns the web site a unique web site ID (step S113) and the web site data is entered in the web site database 77 indexed by the web site ID (step S114). The web site registration CGI 88 then downloads the web site management application installation code from the web site management application installation code store 89 to the information server 40 (step S115). The web site manager application installation code can then be executed at the information server to install all of the necessary components for the implementation of the service i.e. the web site manager 53, and the three CGI applications 42, 43 and 44.

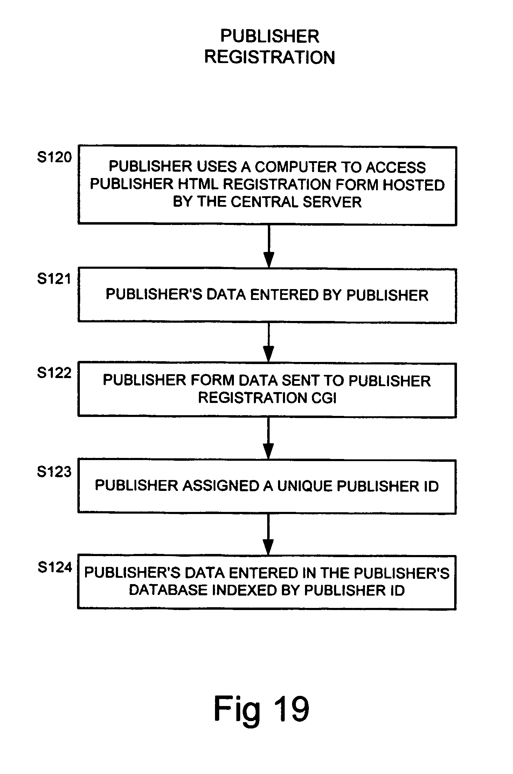

The method of registering publishers of information to the service will now be described with reference to the flow diagram of Figure 19.

A publisher uses a computer with a web browser to access the web server 71 to gain access to the publisher HTML registration form hosted by the central server 70 (step S120). The publisher enters data in the registration form (step S121). The registration form data is sent to the publisher registration CGI 90 (step S122) and the publisher registration CGI assigns the publisher a unique ID (step S 123). The publisher's data is then entered into the publishers' database 88 indexed by the publisher ID by the publisher registration CGI 90 (step S124).

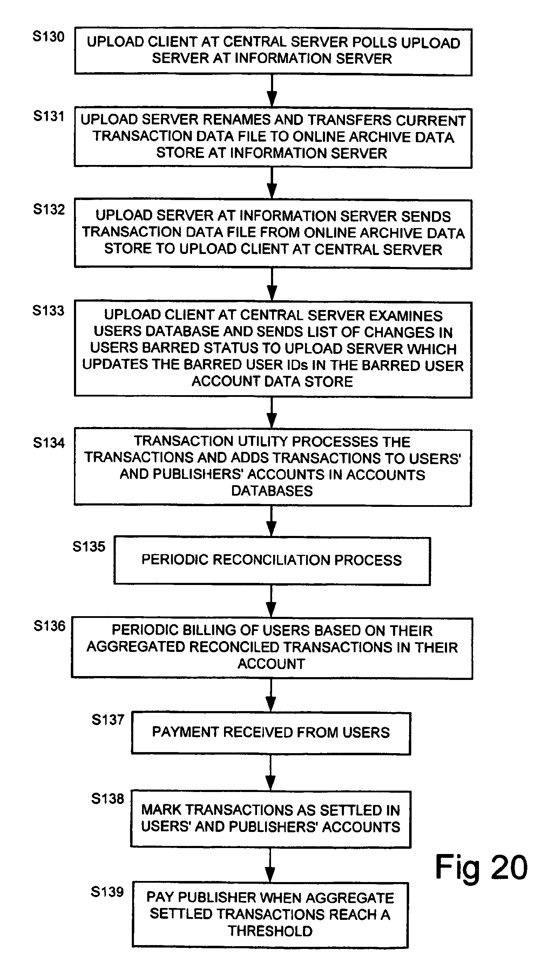

The operation of the central server 70 in calling information servers 40 in order to reconcile and aggregate the transactions will now be described with reference to the flow diagram of Figure 20.

The upload client 79 at the central server 70 is arranged to identify web sites from the web site database 77 and to periodically poll them in order to contact their respective upload servers 47 (step S130). The upload server 47 at the information server 40 renames the current transaction file (step S131) as the Universal Coordinated Time (UTC) date and time in the form YYYYMMDDHHMMSS at which it was first requested by the upload client 79 and transfers the file to the transaction online archive data store 59 at the information server 40 (step S 132). The upload server 47 then inserts the transaction filename into an index of transaction files at the information server and sets the status to "unsent". The upload server 47 encrypts and sends the renamed transaction data file to the upload client 79 at the central server (step S132) and if successful changes the index status to "sent". The upload client 79 reads the transaction data and stores this in the website transaction data store 92 on the central server 70.

The upload client 79 of the central server then examines the users' database 76 at the central server 70 and sends a list of changes in barred users status. This information is used by the upload server 47 to update the barred user account data store 46 at the information server 40 (step S133). Users may be barred from making further purchases if for instance their account is unsettled, the account has been closed or the users credit card is reported as stolen or unusable for any reason. Users may be barred from using the service at all if for instance they have abused the service.

The upload server 47 may request the retransmission of a file or part of a file from the online archive data store 92 on the information server. In this was the central server 70 may recover from a loss of data. Transaction files in the online archive data store 92 on the information server 70 are periodically transferred to an offline archive, e.g. magnetic tape or some other offline storage medium, when the age of a transaction file exceeds a user defined value or the online archive data store 92 free storage space is determined to be running low. In this way, the transaction data stored in the transaction data store 45 of each information server 40 only stores transaction data for recent transaction. This reduces the amount of information that could be accessed by unauthorised personnel and reduces the storage requirement at the information server 40.

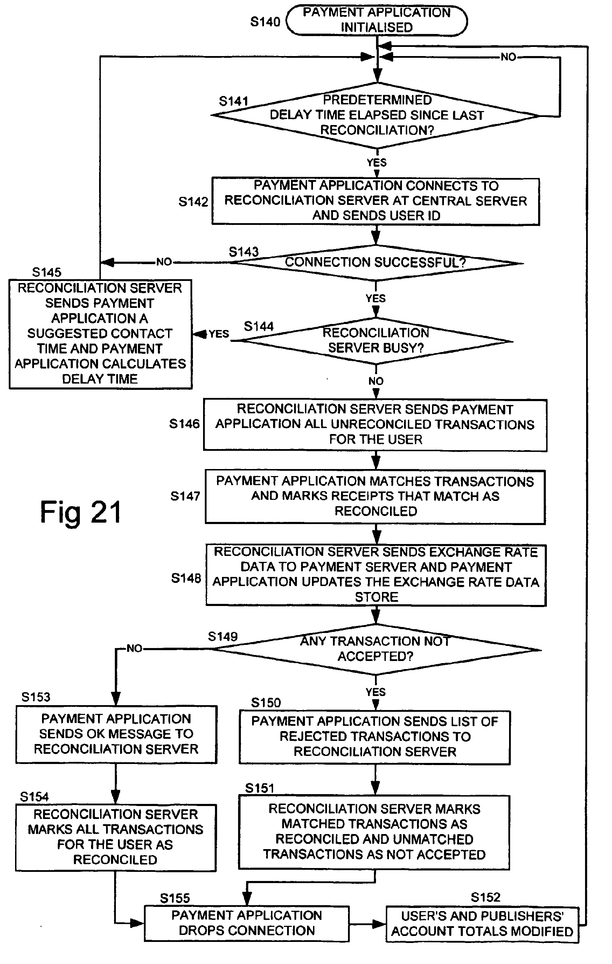

The transaction utility 80 in the central server 70 then processes the transaction data received by the upload client 79 and adds the transaction to the users' and publishers' accounts in the accounts database 83 (step S134). The transactions added to the users' accounts and publishers' accounts are added as unreconciled transactions since this merely represents data received from the information servers. Thus the users' accounts include a total of unreconciled transactions representing a cost to the user and the publishers' accounts show unreconciled transactions for each publisher for a number of users and this represents credit. However, the process of adding the transactions to the account database 83 (step S134) does not provide funds that are accessible to the publishers. The funds are only available once they have been reconciled. Periodically, the reconciliation process takes place (step S135) by the payment application 12 on the user's computer 10 contacting the reconciliation server 84 on the central system 70. This process will be described in more detail hereinafter with reference to the flow diagram of Figure 21.

The result of the reconciliation process is that either the transactions are reconciled i.e. there is a match between the transaction data received from the information server and the receipt data stored in the receipt store 14 at the user's computer, or there is no match and the transaction is not accepted. The transaction utility 80 performs aggregation of the transactions within the accounts database 83. Users are periodically billed based on their aggregated reconciled transactions in their account (step S136). This billing is carried out by the payment server 85 in the central server 70 which makes a connection over a secure payment channel to a credit card server 40 in order to debit the user's credit card account. In order to do this, it has to access a user's database 76 in order to obtain the necessary authorisation information to authorise the transaction from the credit card server 4. The billing of the users takes place periodically when the aggregate amount reaches a certain threshold to make the transaction commercially viable i.e. the amount retrievable is sufficiently large to make it viable to pay the service charge to the credit card company for the transaction. If the aggregate reconciled transactions during a defined period have not reached the threshold, the payment server 85 may still make a request for payment for a threshold amount e.g. 10 dollars to be credited to the user's account. This puts the user's account in credit. This periodic billing even when a threshold has not been reached avoids the possibility of a user spending less the threshold and not being billed for it for some time. Instead, the user is billed for a threshold amount and their account remains in credit until the user spends the credit balance. When the user's credit balance has been consumed, the period after which the user's account will be billed for the threshold amount is calculated from the date of the first transaction to be made by the user after the credit balance is consumed.

When the payment is received from the user's credit card by the payment server 85 (step S 137), the transactions in the accounts database 83 are marked as settled in the users' and publishers' accounts (step S138). When the aggregate settled transactions in a publisher's account reaches a threshold (step S139) the payment server 85 is instructed to make a payment over the secure channel to the publisher's account. The aggregate settled transactions once again should reach a threshold to make it commercially viable to transfer the funds to a publisher's account. Funds are only transferred to the publisher's account once payment has been received from the user.

The reconciliation process (step S135in Figure 20) will now be described in more detail with reference to the flow diagram of Figure 21.

When a payment application 12 is initialised (step S140), it waits a predetermined delay time (step S141) before making a TCP/IP connection over the Internet 20 to the reconciliation server 84 in the central server 70 (step S 142). The unique user ID stored in the user's ID store 15 at the user's computer 10 is sent to the reconciliation server 84 to identify the user. If the connection is not successful (step S143), the payment application waits a predetermined time since the last reconciliation attempt (step S141) before retrying to connect to the reconciliation server 84. If the connection is successful (step S 143), the payment application determines whether the reconciliation server is busy (step S144). If the reconciliation server is busy, the reconciliation server sends the payment application a suggested contact time and payment application calculates a new delay time (step S145). The payment application then waits for the delay time (step S141) before trying to reconnect to the reconciliation server (step S142). If the reconciliation server is not busy (step S144), the reconciliation server 84 sends the payment application 12 all unreconciled transactions for the user in the accounts database 83 (step S 146). The payment application 12 matches the transactions against receipts in the receipt store 14 and marks receipts that match as reconciled (step S 147). The reconciliation server 84 also sends exchange rate data to the payment application 12 from an exchange rate data store 91 in the central server 70 and the payment application 12 updates the exchange rate data stored in the exchange rate data store 16 (step S148). If all of the transactions match receipts in the receipt store 14 (step S 149), the payment application 12 sends an OK message to the reconciliation server 84 (step S153), the reconciliation server 84 marks all transactions for the user in the accounts database 83 as reconciled (step S154). The payment application 12 then drops the connection to the reconciliation server 84 (step S155) and the transaction utility modifies the users and publishers account totals in the account database 83 (step S155).

If not all of the transactions are matched with receipts (step S 149), the payment application 12 sends a list of rejected transactions to the reconciliation server 84 (step S150). The reconciliation server 84 marks the matched transactions as reconciled and the unmatched transactions as not accepted (step S155). The payment application then drops the connection to the reconciliation server 84 (step S155) and the users and publishers account totals are modified by the transaction utility 80 (step S152).

It can be seen from the method described hereinabove with reference to Figures 20 and 21 that the central server aggregates the transaction data from the information servers for users and publishers and carries out a reconciliation process to provide a level of security to verify that there is matching transaction data at the information server 40 and at the users computers 10. Any unmatched transactions will not be billed to a user and a publisher will not be paid for. Transactions which are marked as not accepted in the accounts database can indicate unauthorised transactions being carried out at the information server. This provides a check to ensure correct billing.

Since the payment application 12 marks receipts as reconciled, when the next reconciliation process occurs, the payment application need only look at unmarked receipts in order to reduce the processing required in order to match transactions with unreconciled receipts.

The payment application can also mark receipts as expired or delete receipts which have expired once it is detected that their valid period plus transaction date is beyond the current clock date of the user's computer. This reduces the storage capacity required for the receipt store 14: there is no need to store useless expired receipts. Of course, if the receipts are short-lived compared to the spending limits entered by the user, the total transaction data stored in the spending limit data store 11 for the monitoring of spending is unaffected. The transaction totals will be stored as a total which has date and time associated with each transaction so that for example, yesterday's transactions do not count for today's spending limit total of 7 dollars as illustrated in Figure 13.

As can be seen in Figure 15, the central server 70 includes a publishers account page CGI 81 and a user's account page CGI 82 which allows the publisher and user respectively to access their account information via the web server 71 and the appropriate CGI 81 or 82. The user, publisher and website manager are able to access and amend their details held in the databases 76, 77 and 78 via the web server 71 hosting appropriate HTML forms. In order to do this the user, publisher or website manager enters an ID and password in a secure HTML page hosted by the web server 71. The respective CGI 86, 88 or 90 delivers the HTML form with the account details to allow the user, publisher or website manager to amend form. The respective CGI 86, 88 or 90 (or an associated CGI) then validates and updates the account details in the respective database 76, 77 or 78.

The transactions aggregated by the transaction utility 80 within the accounts database 83 may be in different currencies and therefore the exchange rate data in the exchange rate data store 91 is used to convert the currencies to a user's currency so that the user's account is in the user's chosen currency. Each set of exchange rate data includes a serial number so that when the exchange rate data in the user's computer needs to be updated, this can simply be achieved by comparing the serial numbers of the exchange rate data in the exchange rate data store 91 in the central server 70 and the serial number of the exchange rate data in the exchange rate data store 16 at the user's computer 10. If it is different, the exchange rate data is sent by the reconciliation server over the Internet 20 to the exchange rate data store 16 as described hereinabove (step S148).

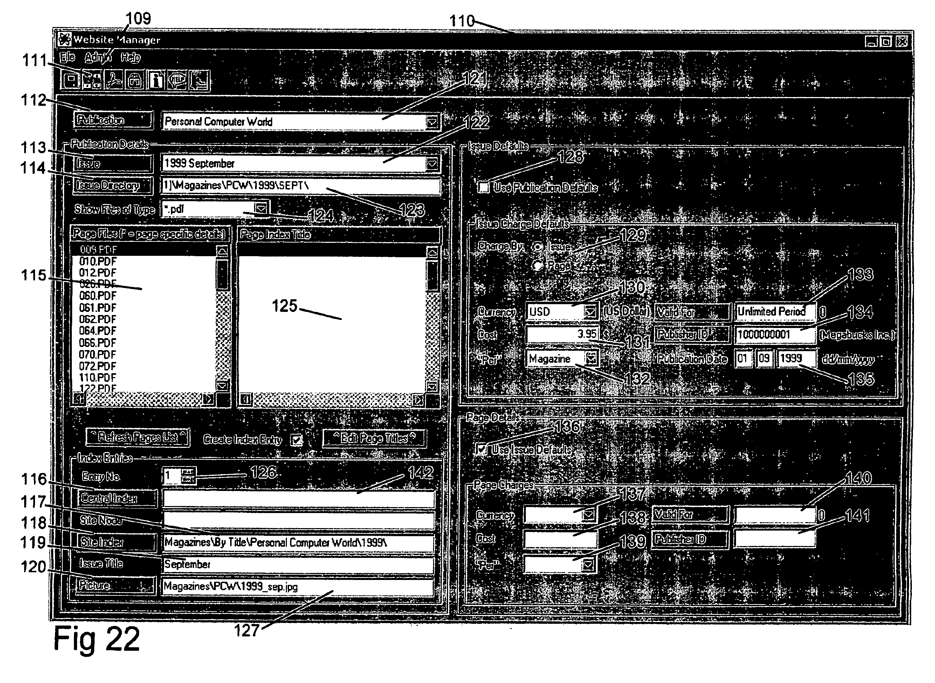

The operation of the web site manager 53 at the information server 40 for setting up and managing the web site where information is made available to users will now be described with reference to Figures 22 to 29.

Figure 22 illustrates the user interface 110 generated by the implementation of the web site manager 53. The web site manager 53 allows the web master to configure the site index information in the site index information store 58, set up charging parameters in the information charge data store 51 and organise the way the information is indexed for the user.

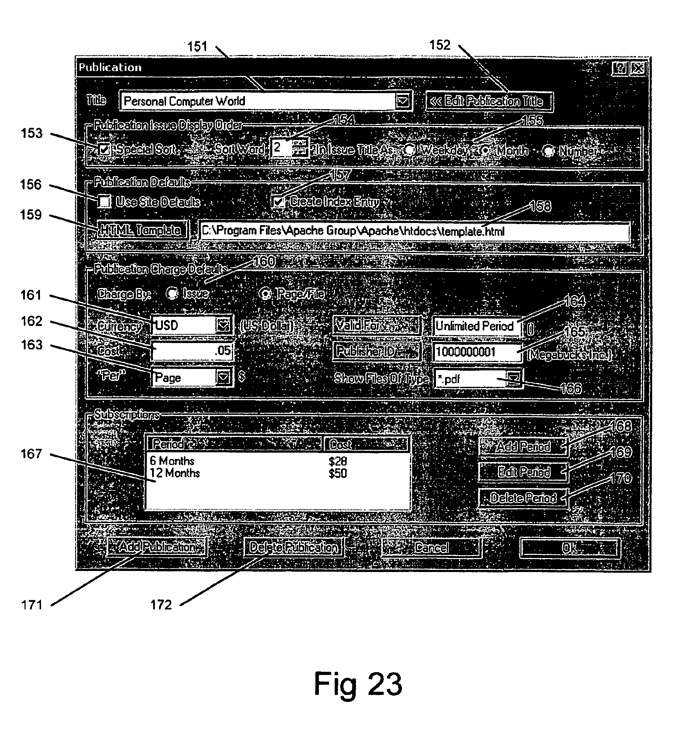

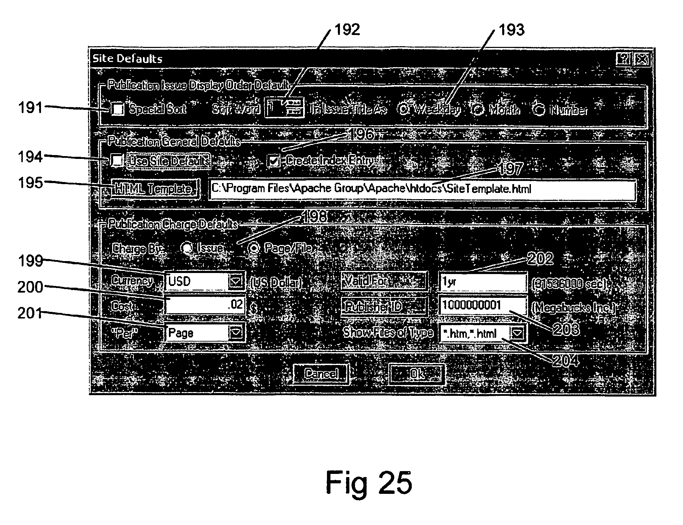

Site charge default details can be entered indicating the charge to be made for all content sold at the web site unless overridden. The interface shown in Figure 25 is invoked from the Admin menu 109 shown in Figure 22. The default method of determining the order in which publication issue titles are displayed in dropdown box 122 of the interface shown in Figure 22 may be defined using controls 191, 192 and 193 in Figure 25. The button 195 enables an HTML template to be selected for the site to be used for generating index web pages when a template has not been defined for a publication using controls 158 and 159 in Figure 23. The HTML template file path is shown in box 197. An HTML template comprises a web page template (HTML code) generated to include special user-defined tags e.g. <XYZ> and </XYZ> which are non standard HTML tags which can be used to identify the position in the web page template at which index links are to be automatically inserted as will be described in more detail hereinafter. Radio buttons 198 allow the publication to be charged either by the issue or by the page. If a publication is defined as being charged by the issue a user requesting to download a chargeable page or file incurs a charge for the entire issue. Further pages of the issue are downloaded to the user without further charge. In this example, the charge details are set up per page. A publisher ID is chosen from a list of publishers to show the publisher ID in the box 203. A currency type (which in this case is US dollars) is chosen in box 199 and a cost per page can be entered in box 200. The selection in box 201 determines the description of the charge unit to be displayed in the index. In this example "$0.02 per Page" would be shown. In box 202 the valid period parameter is entered, which in this example is given as one year. The default file type of the files to be shown in box 115 of Figure 22 is selected in dropdown box 204. This information is stored for the site to be used when the interface of Figure 23 is displayed and the publication is selected using the dropdown box 151 and checkbox 156 is checked indicating that the site default charge data should be used for that publication. Figure 23 thus enables default parameters to be entered for a web site that may be overridden for a specific publication in the interface shown in Figure 23 or a specific issue or specific page or file in the interface shown in Figure 22.

As can be seen in Figure 22, a dropdown box 121 is available to select the publication. Button 112 invokes the interface as shown in Figure 23. Figure 23 enables parameters for a publication, which in this case is Personal Computer World to be set up. Dropdown box 151 allows selection of the publication. Button 152 invokes an interface that allows the publication title to be changed. In this case the publication is designated as a monthly publication. The method of determining the order in which publication issue titles are displayed in dropdown box 122 of the interface shown in Figure 22 may be defined using controls 153, 154 and 155. If checkbox 156 is checked the site default charging data will be used for the publication. The button 159 enables a HTML template to be selected for the publication to be used for generating index web pages for all content pages for the publication. The HTML template file path is shown in box 158. An HTML template comprises a web page template (HTML code) generated to include special user-defined tags e.g. <XYZ> and </XYZ> which are non standard HTML tags which can be used to identify the position in the web page template at which index links are to be automatically inserted as will be described in more detail hereinafter.

Publication charge default details can be entered indicating the charge to be made for the publication unless overridden. Radio buttons 160 allow the publication to be charged either by the issue or by the page. If a publication is defined as being charged by the issue a user requesting to download a chargeable page or file incurs a charge for the entire issue. Further pages of the issue are downloaded to the user without further charge. In this example, the charge details are set up per page. A publisher ID is chosen from a list of publishers to show the publisher ID in the box 165. A currency type (which in this case is US dollars) is chosen in box 161 and a cost per chargeable unit (either issue or page or file) can be entered in box 162. The selection in box 163 determines the description of the charge unit to be displayed in the index. In this example "$0.05 per Page" would be shown. In box 164 the valid period parameter is entered, which in this example is given as unlimited. In box 167, subscription periods and costs can be entered so that a user is able to subscribe to a number of specific issues. The issues that a user may access under a subscription are determined by the publication dates of the issues and the start date and period of the subscription purchased. Thus users may continue to access issues to which they have subscribed after the subscription period has passed. This information is stored for the publication to be used when the interface of Figure 22 is displayed and the publication issue is selected using the dropdown box 122 and checkbox 128 is checked indicating that the publication default charge data should be used for that issue. Figure 23 thus enables default parameters to be entered for a publication that may be overridden for a specific issue or specific page or file in the interface shown in Figure 22.

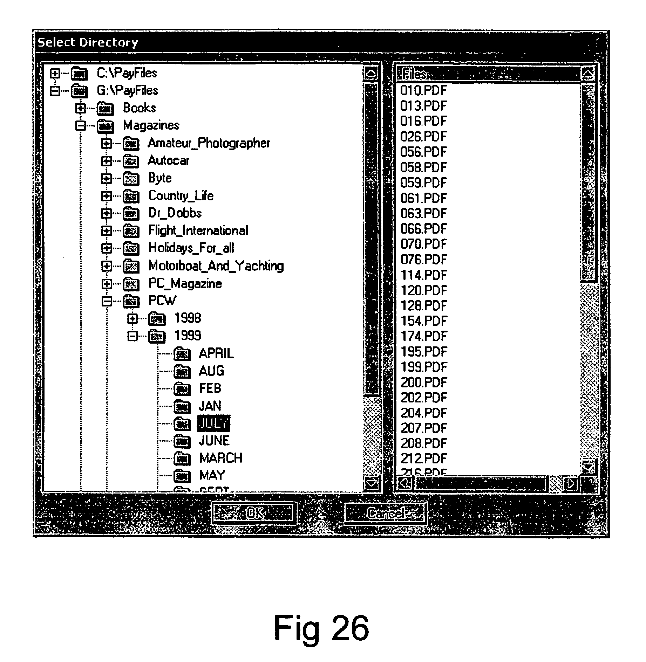

In Figure 22, publication issue details can be entered and selected. The issue can be selected in dropdown box 122. Button 114 invokes the interface as shown in Figure 26 from which the directory containing the files that comprise the publication issue can be selected. The issue directory selected is shown in box 123.

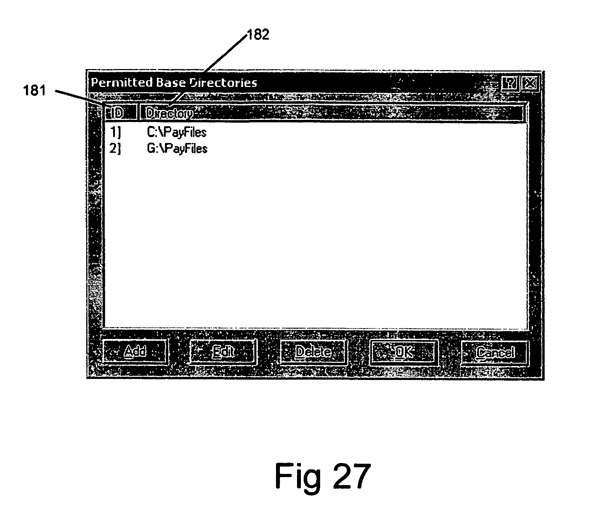

The directories offered for selection in the interface shown in Figure 26 are limited to those defined by the system administrator as permitted base directories. These are defined in the interface shown in Figure 27, which is accessible from the Admin menu 109 shown in Figure 22. Upon definition the permitted directory defined in column 182 of Figure 27 is allocated a token value shown in column 181. The token value delimited by a right square bracket is used in the URL links generated in the HTML index files and content files to refer to the corresponding permitted base directory path. Users may select as an issue directory 123 any directory that is a permitted base directory or a directory that has a permitted base directory as its root. Thus users are prevented from placing content for sale in directories that are unauthorized and a potential security risk. Additionally the entire structure of the machines or networks or storage devices or directories may be changed without the need to redefine the location of each group of files that comprise the various publication issues. Additionally this obfuscation increases the resistance of the system to malicious attack via the Internet.

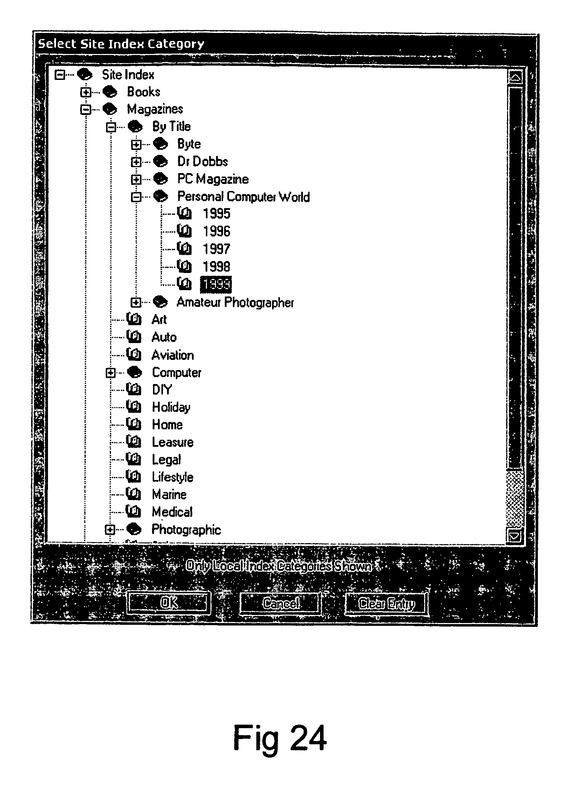

In box 115 in Figure 22, the files contained in the issue directory are listed. These files typically contain the pages, chapters or other subdivisions of the publication issue. The files listed in box 115 may be limited to those with the file type selected in dropdown box 124 thus excluding from publication files not intended for publication, e.g. administrative data files. Index entries identify the index structure for the information. A central index category can be entered and selected using the button 116. This indicates the central index category in which the title of the publication issue defined in box 119 will be placed in the information index database 75 at the central server 70. A site index category can be input and selected using the button 118 to display the interface shown in Figure 24. Up to six central index and six site index entries may be defined for an issue, each separate entry being selected by control 126. That is up to six separate values may be entered in boxes 117, 119 and 142.

Figure 24 shows the local index categories and provides a hierarchical organisation of information. In this case the Personal Computer World magazine has five years worth of issues selectable. Thus, this index data can be used for the organisation of the information. In box 119 of Figure 22, the issue title is defined. Button 120 invokes an interface from which an image file may be selected to represent the issue. The path of the image file is displayed in box 127. Thus for the September 1999 issue of Personal Computer World, there is a thumbnail image available.

If checkbox 128 is checked the issue selected will use the publication default charge data. If checkbox 128 is unchecked the issue selected will derive its default charging information from controls 129, 130, 131 132 133 and 134 of Figure 22. Using control 129 a user can select whether the charge defined in box 131 is levied for an entire issue or a single page or file. A user can select the currency using the box 130, the cost using the box 131. The selection in box 132 determines the description of the charge unit to be displayed in the index. In this example "$3.95 per Magazine" would be shown. The valid period can also be selected using box 133 and the publisher ID can be selected using box 134. Also the publication date can be selected using box 135.

The charging information for individual pages or files may be defined separately to override the issue default charging information. Individual pages or files may be selected in box 115. If checkbox 136 is checked the page or file selected in box 115 will use the issue charging information defaults. If checkbox 136 is unchecked the page or file selected in box 115 will derive its charging information from controls 137, 138, 139 140 and 141 of Figure 22. A user can select the page or file currency using the box 137, the page or file cost using the box 138. The selection in box 139 determines the description of the charge unit to be displayed in the index. The page or file valid period can also be selected using box 140 and the page or file publisher ID can be selected using box 141.

Thus the charging information for a large amount of content for sale may be defined with the minimum of input yet be easily overridden for a single issue or a single page or file.

In box 125, text information for each page or file can be input as an index title. This enables the text to be input as a link rather than relying on an image.

Using the web site manager 53, details on the hierarchical index structure of the site can be constructed to form a site index identifying the organisation of information. This is stored in the site information index store 58, the charge information which includes master site ID, site ID, file ID, content ID, publication ID, cost, currency, valid period, publisher ID, publication date and the unit to which the costs relate, are stored in the information charge data store 51. This information can be accessed by the first and third CGI applications 43 and 44 using file ID for CGI application 1 and application ID for CGI application 3 i.e. for subscriptions. For subscriptions, subscription information is also entered in the information charge data store but this instead of being indexed by file ID (which includes content ID) is instead indexed by publication ID. Information in the information charge data store 51 includes all of the information necessary for forming the transaction receipt and the subscription receipt.

Once a user has constructed the site index hierarchy and arranged the information in a desired manner, either a title or titles in box 125 or a picture using box 127 must be provided for each node in the index tree i.e. for each page of information (the leaf of the tree) or for each node such as an issue, a year, or a publication e.g. Personal Computer World.

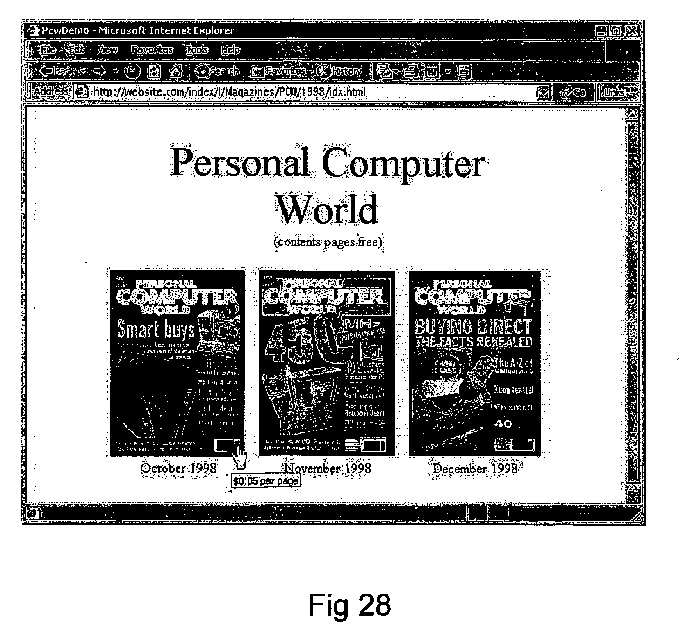

Having constructed the hierarchical organisation of index data and entered data to be used as a link on an index web page, the user can select button 111 and the web site manager will use the appropriate HTML templates to automatically generate index web pages such as that shown on Figure 28. As can be seen in the web site address of Figure 28, the issue directory identifies the directory path for the index web page. In this example, 3 thumbnail images are arranged within a template. The index web page also includes code to provide cost information to a user. In this embodiment, it can be seen that there is the ability provided by the web page to provide a mouse over operation enabling the cost per page to be displayed to the user.

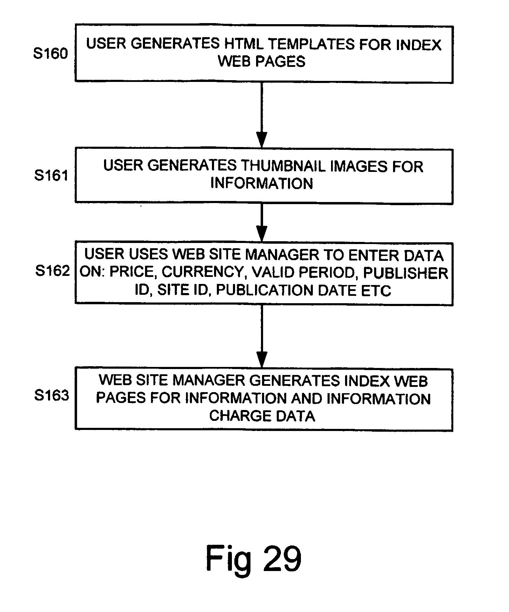

Figure 29 is a flow diagram illustrating the process for generating the index web pages. Initially a user uses the HTML editor 57 to generate HTML templates for index web pages for various nodes in the index tree (step S160). The HTML templates are stored in the HTML template store 56 which can be read by the web site manager 53. The HTML editor 57 can comprise any proprietary HTML editor or even a text editor for writing HTML code.

The user also uses an image editor 54 to access information in the chargeable information store 52 to generate thumbnail images for the information (step S161). The thumbnail images are stored in the thumbnail image store 55 and can be accessed by the web site manager 53. The image editor 54 can comprise any conventional image editing program.

The user then uses the web site manager 53 to enter data on price, currency, valid period, publisher ID, site ID, publication date etc as described hereinabove (step S162). When the user selects the button 111, the web site manager then uses the HTML templates, the thumbnail images and the information input by the user to generate index web pages for information and information charge data (step S 163). The index web pages are stored in the information index web page store 50 and the information charge data is stored in the information charge data store 51.

The central information index maintenance server 74 maintains and updates the central information index web page data store 73. In order to do this, the central information index maintenance server 74 can also receive requests from the web site manager 53 to add or edit central index nodes. For instance a website may wish to add a new publication title to a central index category or node. The granting of this request is controlled by the "trust level" of the website in question. A website having a high "trust level" is allowed to add or edit index categories without restriction. A request to add or edit an index category or node from a website having a lower "trust level" triggers the manual intervention of an operator at the central server 70.

The auto-generation of the information index web pages uses the hierarchical index information to determine how to organise and arrange the links inserted in the HTML template. Thus, the web master is able to use the web site manager to select the order of the files in order to select the order in which they appear in the index web page. The web site manager automatically arranges the thumbnail images in the index web page in accordance with the order in the index data thus ensuring a logical ordering of the links to the information for the user to interface with.

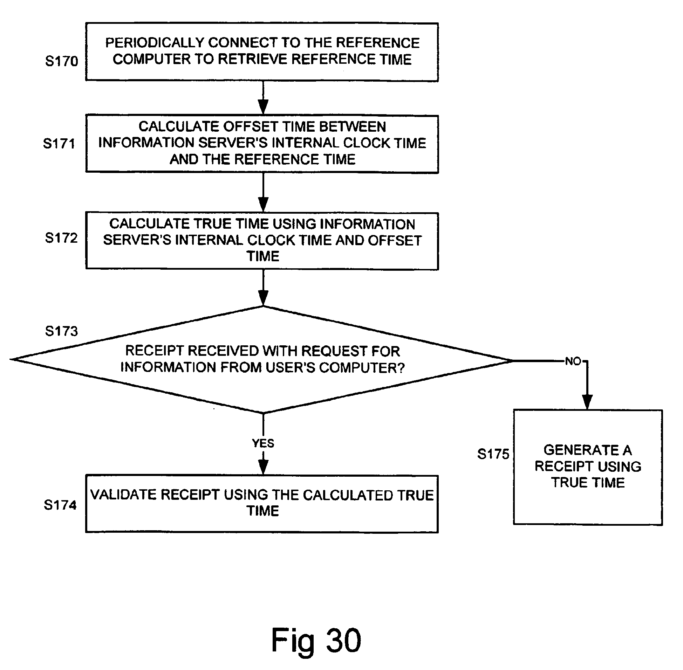

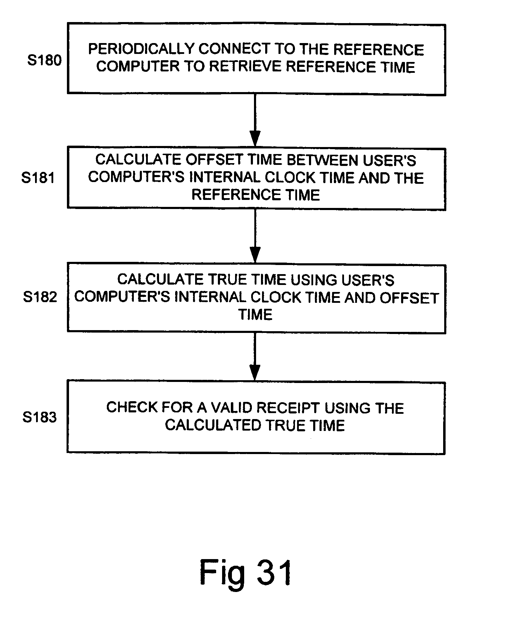

The method of synchronising time at the information server and at the user's computer will now be described with reference to Figures 30 and 31.

An important factor in the security of the system is the validation of receipts by the information servers and the users computers. The validation procedure relies on determining whether the receipts have expired. This requires a reference time. A reference time can be obtained from the internal clock of the user's computer and of the information server. However, these clocks may not be synchronised and can be altered by the user or by the web master. This would allow a user or a web master to circumvent the validation procedure by altering the internal clock of the computer. For example, a user could put back the internal clock of the user's computer so that the receipt is determined to be valid and is sent. Also, a web site manager could turn forward the clock at an information server so that receipts are always determined to be invalid and users are always recharged for information and new receipts are issued.

One method to overcome this would be to resynchronise the internal clock of the user's computer and the information servers periodically. However, the resynchronisation of internal clocks can cause significant problems for other operations carried out by the computers.

Therefore, in this embodiment of the present invention, the resynchronisation of the clocks at the computers is avoided by determining an offset time at each computer and using the offset time for the processing of data.

Figure 30 is a flow diagram illustrating a process implemented at the information server in accordance with an embodiment of the present invention. Periodically, the information server connects to a reference computer to retrieve a reference time (step S 170). An offset time between the information servers internal clock time and the reference time is calculated (step S 171). A true time is then calculated using the information server's internal clock time and the calculated offset time (step S172). When the information server receives the request for information, it determines whether there is a receipt with the request for information (step S 173). If not, a receipt is generated using the true time (step S175). A receipt can then be transmitted to the user. If a receipt is received with the request for information from the user's computer (step S173), the receipt is validated using the calculated true time (step S175).

Figure 31 is a flow diagram illustrating the process implemented at the user's computer in an embodiment of the present invention.

Periodically, the user's computer connects to a reference computer to retrieve a reference time (step S180). The reference computer may or may not be the same as that connect to by the information server so long as the reference time is substantially synchronised. An offset time is calculated using the user's computer internal clock time and the reference time (step S181). A true time is calculated using the user's computer internal clock time and the offset time (step S182). Valid receipt determination is carried out using the calculated true time (step S183).

Thus both at the information server and at the user's computer, offset times are stored. At the information server, the offset time is used in the generation of the receipts. At the user's computer, the offset time is used in the validation of the offset receipts. Thus the storage of an offset time avoids the need to reset the internal clock of the information server and the user's computer, thereby avoiding complications for other processing operations.

All times used for determining transaction times and receipt validity are Universal Coordinated Time (UTC) also referred to as Greenwich Mean Time (GMT). The reference time can be obtained by the user's computer and the information server from the same time server over the Internet, but need not. It is common for there to be more than one time server available which means that the information server and the user's computer could access different time servers. Each timer server will give the same time, normally UTC (GMT), to within a very small degree of error. Even allowing for slight inaccuracies in calculating the network round trip time, the error is rarely more than a small fraction of a second. Internet protocols in general work to an accuracy of one second in determining the age of an entity. Thus this is the degree of synchronicity which suffices in this embodiment.

As an alternative to using a time server for determining an offset time for both the application server and the user's computer for use in the recording of the time of generation of a receipt and for validating a receipt, in another embodiment the application server synchronises its clock with a reference time server and Greenwich Mean Time (GMT) is used as the standard time frame for the receipts. In order to synchronise the user's computer, in this embodiment the reference GMT can be provided to the user's computer from the CGI application 2 at the time of sending the file ID. This can be used as a reference GMT. An operating system function within the user's computer can give GMT for the user's computer by compensating for the local time setting of the computer. This 'local GMT' can be compared to the reference GMT retrieved from the application server to generate an offset to be used in the validation of receipts. Thus the validation procedure uses GMT and local GMT is determined by determining the current system time and using the system time zone information available from the operating system to determine a local GMT. This is then modified by the determined offset and used for comparison with the receipt time parameters. Thus this method compensates for lack of synchronicity of the user's computer and ensures that the time frame used for validation of the receipts is GMT hence avoiding time differences for worldwide users. When a user wishes to display information on transactions, the local time frame can be taken into account by using the operating system function that indicated the user's local time zone. The GMT values are converted to local time values using the information on the local time zone. This enables a user to check the transaction information in relation to events in their local time zone.

An embodiment of the present invention can avoid multiple unintentional requests being transmitted to the information server. Such multiple unintentional requests can result from a multiple mouse click operation by a clumsy user, a switch bounce occurrence in the mouse, or multiple click operations caused by an impatient user who resends a request while waiting for a response from the information server in the belief that the server is not receiving or responding to the requests. Such multiple unintentional requests could cause multiple charges for the information that the user intends to request because at the time of making the request, a previous request may not have completed and thus no receipt for the information would be generated to prevent recharging for the same information. This delay in generating a stored receipt at the user's computer is a result of the delay in the communications network for the transmission of the request and for the delivery of the information and any delay in the response of the server to the request.

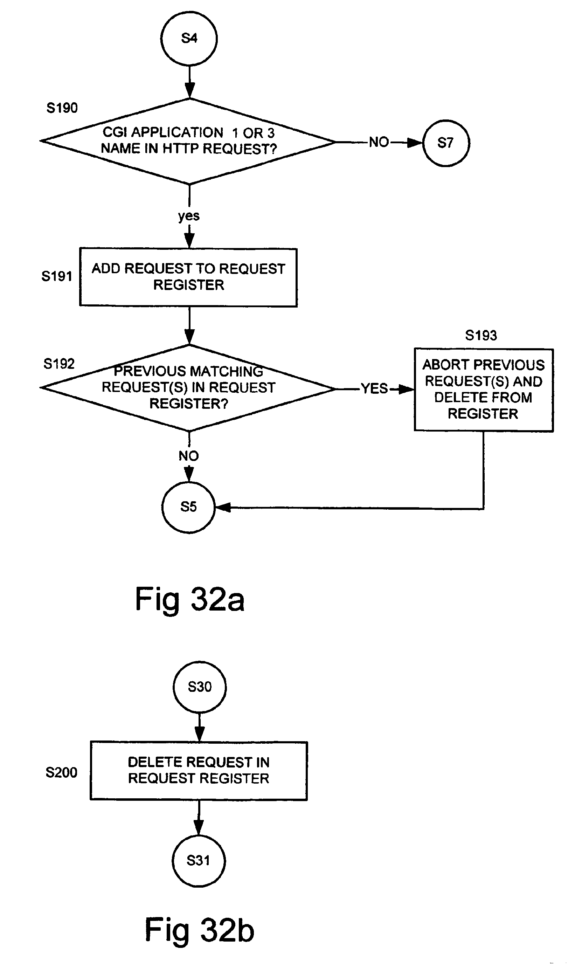

In this embodiment requests are stored in a request register until they are fulfilled by the provision of the information and the storage of a receipt at the user's computer. Figure 32a and 32b are flow diagrams of the method steps performed in this embodiment additional to the steps of the method of figure 6a and figure 7.

As can be seen in figure 32a, the payment application identifies if a request for information is input (identified as an http request containing the name of the CGI application 1 or 3) (step S 190). If the request does not contain either of the CGI application names, the payment application transparently passes the request to the Internet (step S7 in figure 6a). If the request is a request for information, the request is added to the request register (step S191). It is then determined whether there are earlier unfulfilled requests for the same information by identifying the same requests in the request register (step S 192). If there are earlier requests, these earlier requests are aborted in favour of the most recent request (step S 193). The reason for aborting the earlier requests in this embodiment rather than the later requests is because of the functionality of the web browser, which in this embodiment is Microsoft Internet Explorer (Trade Mark). The present invention is not however restricted to the abortion of the earlier requests. If there are no earlier requests or when the earlier requests are deleted, the process proceeds to step S5 in figure 6a. Thus this process avoids multiple requests being sent to the information server. This not only has the benefit of avoiding the possibility of being charged more than once for the same piece of information, but it also reduces bandwidth usage.

As can be seen in figure 32b in conjunction with figure 7, in this embodiment, when the header for the information is received by the payment application, it then deletes the request in the request register (step S200). Thus when the request is responded there is no longer a need to protect against multiple requests. This is because if it was the first request a receipt is now stored by the payment application (step S32 in figure 7) and hence there is no risk of multiple charges, and also the user is able to see a response to their request and hence they are unlikely to generate further requests due to impatience.

Although the present invention has been described hereinabove with reference to a specific embodiment, modifications lie within the spirit and scope of the present invention as will be apparent to a skilled person in the art.

Although the embodiment of the present invention has been described with reference to networking over the Internet, the present invention is applicable to networking over any type of communications network. For example, the present invention is applicable to networking over a local area network, an Intranet, or an Extranet. Further, the communications network can comprise a terrestrial or a wireless communications network, or a combination of both.

In the embodiment of the present invention, a file identifier is used to identify each piece of information. Although a file path will uniquely identify a piece of information at an information server, it is possible that a mirrored site could provide the same information. Thus, the use of a file ID ensures that this piece of information is uniquely identified and the file ID can identify the master site ID from which the file ID which includes the content ID for the information which was originally generated.

In an embodiment of the present invention, the payment application comprises an independent executable application. The application is independent of the browser thereby providing independence of the security functions of the browser and providing the additional security functions of reconciliation. The executable application can be written in any suitable programming code including C++ and Java (trade mark). The payment application in the embodiment is implemented as a proxy web server through which HTTP requests from the browser are routed and through which all responses are routed. In an alternative embodiment, the payment application could monitor the HTTP requests and responses at the socket layer by patching into winsock.dll in the Microsoft Windows 95 and 98 (trade mark) operating system. The payment application and the web browser are two simultaneously implemented applications cooperating together. The payment application acts as a trusted application to provide the payment function and a level of security without requiring significant user input. For example the use of the payment application avoids the need for a user to set and continuously override security warnings by a browser when using secure features of a browser e.g. the secure socket layer, cookies, or Java (trade mark)applets.

In an embodiment of the present invention, the user ID and the receipt information transmitted between the payment application and the information server is encrypted. The encryption can be of any proprietary form and provides an additional low level of security.

Although the embodiment of the present invention is described with reference to access to files comprising an image of a magazine page, the present invention is applicable to the payment for and provision of electronic content of any form for which there is a charge to be made to the recipient of the information. For example, the information can comprise audio, video, images, text, documents, computer data, computer files, etc. The present invention is also, further applicable to pay TV for example.

The present invention is not limited to micro payments. The cost of the transaction can comprise any amount that can be billed to a customer. Where the amounts are large, these need not be aggregated at the central server but can instead be billed immediately.

Although in the described embodiment the information server and the central server are described as comprising a single server, the present invention encompasses the configuration of the information server and the central server as a file server configuration in which an operator is connected to a file server to access, configure and control the system. Thus in this configuration the information server and the central server need not have a user interface capability i.e. there is no requirement for a monitor, mouse and keyboard. The user interface capability can be provided by a local area network to connect another computer to the file server.

Further, modifications which lie within the scope of the present invention will be apparent to a skilled person in the art.

## Claims

1. Terminal apparatus for use by a customer in a secure payment system for payment for a product in electronic form, the terminal apparatus comprising:
a network interface (30) for connection to a communications network;
a processor (31);
a web browser application (31 a) executed by said processor to allowing a user to generate HTTP requests, said requests including a request for a said product comprising an HTTP request with code to identify the request as a request for a said product;
data storage means (35) for storing transaction receipts comprising data identifying products for which payments were made during at least one previous transaction; and
executable application code (31 b) executed by said processor to act as a web proxy to receive said request from said web browser means, to determine whether or not said request is a request for a said product by determining whether or not said request includes said code and to transmit said request over said communications network unchanged if said request is not a request for a said product, to determine if the product has been paid for previously if said request is for a said product by identifying if there is a corresponding transaction receipt stored in said data storage means and to control said network interface to transmit said request for the product over the communications network to a merchant's terminal with any identified transaction receipt for the product, to receive and pass said product from said merchant's terminal to said web browser, and to receive a transaction receipt for said product from said merchant's terminal over the communications network and store the received transaction receipt in said data storage means
wherein said executable application code is adapted to encode any receipt as ASCII and add the ASCII to said request before transmitting the request over the communications network.

2. Terminal apparatus according to claims 1, wherein said executable application code is adapted to transmit transaction receipts stored in said data storage means to a payment server.

3. Terminal apparatus according to any preceding claim, wherein said executable application code is adapted to receive transaction information from a payment server, to compare the transaction information with the transaction receipts in said data storage means, and to send information on the result of the comparison to the payment server.

4. Terminal apparatus according to any preceding claim, wherein said web browser is adapted to allow a user to request a subscription for a regularly provided product, wherein said executable application code is adapted to transmit the subscription request over the communications network to the merchant's terminal, to receive a subscription receipt from said merchant's terminal over the communications network, to store the received subscription receipt in said data storage means, and to determine if the product has been paid for previously by identifying if there is a corresponding transaction receipt or subscription receipt stored in said data storage means.

5. Terminal apparatus according to any preceding claim, wherein said executable application code is adapted to transmit unique user identification information with said request over said communications network, and said transaction receipt includes the unique user identification information.

6. A method of obtaining and paying for a product in electronic form, the method comprising:
receiving a user selection (S2) in a web browser (3 1 a) and generating HTTP requests, said requests including a request for a said product comprising an HTTP request with code to identify the request as a request for a said product (S3);
in a web proxy (31b), receiving said request from said web browser, determining whether or not said request is a request for a said product by determining whether or not said request includes said code and transmitting said request over a communications network unchanged if said request is not a request for a said product, determining if the product has been paid for previously if said request is for a said product by identifying if there is a corresponding transaction receipt stored in a data storage means storing transaction receipts comprising data identifying products for which payments were made during at least one previous transaction and transmitting said request for the product over the communications network to a merchant's terminal with any identified transaction receipt for the product, receiving and passing said product from said merchant's terminal to said web browser, and receiving a transaction receipt for said product from said merchant's terminal over the communications network and storing the received transaction receipt in said data storage means,
wherein said web proxy encodes any receipt as ASCII and adds the encoded receipt to the request before transmitting the request over the communications network.

7. A method according to claim or claim 6, wherein said web proxy transmits stored transaction receipts to a payment server.

8. A method according to claim 6 or claim 7, wherein said web proxy receives transaction information from a payment server, compares the transaction information with the stored transaction receipts, and sends information on the result of the comparison to the payment server.

9. A method according to any one of claims 6 to 8, wherein said web browser receives a user subscription selection and generating a request for a subscription for a regularly provided product, and said web proxy receives and transmits the subscription request over the communications network to the vendor, receives a subscription receipt from said vendor over the communications network, stores the received subscription receipt in said data storage means, and determines if the product has been paid for previously by identifying if there is a corresponding stored transaction receipt or subscription receipt.

10. A method according to any one of claims 6 to 9, wherein said web proxy transmits unique user identification information with said request over said communications network, and said transaction receipt includes the unique user identification information.

11. Merchant's terminal apparatus for providing products in electronic form to the terminal apparatus according to any one of claims 1 to 6 over a communications network, the apparatus comprising:
a processor (61);
product storage means (65) for storing products in electronic form;
transaction storage means (65) for storing transaction data to enable the users to be charged for provided said products;
a web server application (61b) implemented by said processor for receiving a request for a said product from a web proxy at a user's terminal apparatus over the communications network, said request comprising an HTTP request with code to identify the request as a request for a said product and a transaction receipt for any said product previously purchased by the user; and
an application program (61 b-d) implemented by said processor and interfaced to said web server application for determining if a valid transaction receipt for said product is included with the request, for providing the requested product to said web server application if a valid transaction receipt for the product is received from the user's terminal apparatus, and for generating and providing a transaction receipt for the requested product to said web server application if a valid transaction receipt is not included with the request;
wherein said web server application (61b) is adapted to transmit the requested product over the communications network to the user's terminal if a valid transaction receipt for the product is received from the web proxy at the user's terminal, and to transmit the requested product over the communications network to the user's terminal apparatus with the generated transaction receipt for the product if a valid transaction receipt for the product is not included with the request; and said application program (61) is adapted to record the generated transaction receipt in said transaction storage means,
wherein said transaction receipt, if present, is encoded in the request as ASCII; and said application program is
adapted to decode any transaction receipt in a received request and to encode a generated transaction receipt as ASCII and add the ASCII to an HTTP header sent with the product before the product is transmitted over the communications network by said web server.

12. Merchant's terminal apparatus according to claim 11, wherein the request includes unique user identification code, wherein said application program is adapted to perform a validation of the received unique user identification code and to prevent the transmission of the requested product if the validation fails.

13. Merchant's terminal apparatus according to claim 12, including unauthorised user storage means for storing information on users who are not authorised to receive products, wherein said application program is adapted to compare the received unique user identification code with the information in said unauthorised user storage means and to prevent the transmission of the requested product if the comparison identifies that the user is not authorised.

14. Merchant's terminal apparatus according to any one of claims 11 to 13, wherein said web server is adapted to receive a subscription request for a product from a user's terminal, and said application program is adapted to provide a subscription receipt for the product, wherein said web server is adapted to transmit the subscription receipt to the user's terminal apparatus, said application program is adapted to determine if a valid subscription receipt for the product is included with the request for the product; and said web server is adapted to transmit the requested product over the communications network to the user's terminal apparatus with no charge if a valid subscription receipt for the product is received from the user's terminal apparatus with the request for the product, and to transmit the requested product over the communications network to the user's terminal apparatus with the transaction receipt for the product if a valid transaction or a subscription receipt for the product is not received from the user's terminal apparatus with the request for the product.

15. Merchant's terminal apparatus according to any one of claims 11 to 14, including transaction storage control means for transmitting the transaction data stored in said transaction storage means to a payment server over said communications network.

16. Merchant's terminal apparatus according to claim 15, wherein said transaction storage control means is adapted to delete the transaction data stored in said transaction storage means after the transmission of the transaction data to said payment server over said communications network.

17. Merchant's terminal apparatus according to any one of claims 11 to 16, including index storage means for storing an index of the products stored in said product storage means as web pages with hypertext links comprising requests for products, wherein said web server is adapted to allow a web browser operated by a user to access the index storage means to use the index to generate a request for a product.

18. Merchant's terminal apparatus according to any one of claims 11 to 17, wherein said web server is adapted to transmit said requested product to the user's terminal without charge if a valid transaction receipt for the product is received from the user.

19. A method of providing products in electronic form to a user's terminal apparatus over a communications network, the method comprising:
receiving a request for a said product from a web proxy at a user's terminal apparatus at a web server application (61b) over the communications network, said request comprising an HTTP request with code to identify the request as a request for a said product and a transaction receipt for any said product previously purchased by the user; and
at an application program (61b-d) interfaced to said web server application, determining if a valid transaction receipt for said product is included with the request, providing the requested product to said web server application if a valid transaction receipt for the product is received from the user's terminal apparatus, and generating and providing a transaction receipt for the requested product to said web server application if a valid transaction receipt is not included with the request;
transmitting the requested product over the communications network from said web server application (61b) to the web proxy at the user's terminal apparatus if a valid transaction receipt for the product is received from the user's terminal apparatus, and transmitting the requested product over the communications network from said web server application (61 b) to the user's terminal apparatus with the generated transaction receipt for the product if a valid transaction receipt for the product is not included with the request; and
recording the generated transaction receipt in a transaction storage means storing transaction data to enable the users to be charged for provided said products;
wherein said transaction receipt, if present, is encoded in the request as ASCII; and said application program decodes any transaction receipt in a received request and encodes a generated transaction receipt as ASCII and adds the ASCII to a HTTP header sent with the product before the product is transmitted over the communications network by said web server.

20. A method according to claim 19, wherein the request includes unique user identification code, wherein said application program performs a validation of the received unique user identification code and prevents the transmission of the requested product if the validation fails.

21. A method according to claim 20, including unauthorised user storage means for storing information on users who are not authorised to receive products, wherein said application program compares the received unique user identification code with the information in said unauthorised user storage means and prevents the transmission of the requested product if the comparison identifies that the user is not authorised.

22. A method according to any one of claims 19 to 21, wherein said web server receives a subscription request for a product from a user's terminal apparatus, said application program provides a subscription receipt for the product, said web server transmits the subscription receipt to the user's terminal, said application program determines if a valid subscription receipt for the product is included with the request for the product; and said web server transmits the requested product over the communications network to the user's terminal apparatus with no charge if a valid subscription receipt for the product is received from the user's terminal apparatus with the request for the product, and transmits the requested product over the communications network to the user's terminal apparatus with the transaction receipt for the product if a valid transaction or a subscription receipt for the product is not received from the user's terminal apparatus with the request for the product.

23. A method according to any one of claims 14 to 24, including transmitting the transaction data stored in said transaction storage means to a payment server over said communications network.

24. A method according to claim 23, including deleting the transaction data stored in said transaction storage means after the transmission of the transaction data to said payment server over said communications network.

25. A method according to any one of claims 19 to 24, including storing an index of the products stored in said product storage means as web pages with hypertext links comprising requests for products, and said web server allows a web browser operated by a user to access the index storage means to use the index to generate a request for a product.

26. A method according to any one of claims 19 to 25, wherein said web server transmits said requested product to the user's terminal apparatus without charge if a valid transaction receipt for the product is received from the user.

27. A carrier medium carrying computer readable code for controlling a computer to carry out all the steps of the method of any one of claims 6 to 10 or 19 to 26.

## Patentansprüche

1. Endgerätevorrichtung zur Verwendung durch einen Kunden in einem gesicherten Zahlungssystem zur Zahlung für ein Produkt in elektronischer Form, wobei die Endgerätevorrichtung umfasst:
eine Netzwerkschnittstelle (30) zur Verbindung mit einem Kommunikationsnetzwerk;
einen Prozessor (31);
eine Webbrowseranwendung (31a), die durch den Prozessor ausgeführt wird, um es einem Benutzer zu erlauben, HTTP-Anforderungen zu generieren, wobei die Anforderungen eine Anforderung eines besagten Produkts beinhalten, umfassend eine HTTP-Anforderung mit Code, um die Anforderung als Anforderung eines besagten Produkts zu identifizieren;
Datenspeichermittel (35) zum Speichern von Transaktionsbelegen, Daten umfassend, die Produkte identifizieren, für die Zahlungen während mindestens einer vorangegangenen Transaktion geleistet wurden; und
ausführbaren Anwendungscode (31b), der durch den Prozessor ausgeführt wird, um als Webproxy zu agieren, um die Anforderung vom Webbrowsermittel zu empfangen, um durch Ermitteln, ob die Anforderung den Code beinhaltet oder nicht, zu ermitteln, ob die Anforderung eine Anforderung eines besagten Produkts ist oder nicht, und die Anforderung unverändert über das Kommunikationsnetzwerk zu übertragen, wenn die Anforderung keine Anforderung eines besagten Produkts ist, um, falls die Anforderung die eines besagten Produkts ist, durch Identifizieren, ob es einen entsprechenden, in dem Datenspeichermittel gespeicherten Transaktionsbeleg gibt, zu ermitteln, ob für das Produkt vorher gezahlt worden ist, und die Netzwerkschnittstelle zu steuern, um die Anforderung des besagten Produkts über das Kommunikationsnetzwerk mit jedwedem identifizierten Transaktionsbeleg für das Produkt an ein Händlerendgerät zu übertragen, um das Produkt vom Händlerendgerät zu empfangen und zum Webbrowser weiterzuleiten und um einen Transaktionsbeleg für das Produkt vom Händlerendgerät über das Kommunikationsnetzwerk zu empfangen und den empfangenen Transaktionsbeleg in dem Datenspeichermittel zu speichern;
wobei der ausführbare Anwendungscode ausgelegt ist, jedweden Beleg als ASCII zu codieren und das ASCII der Anforderung vor dem Übertragen der Anforderung über das Kommunikationsnetzwerk hinzuzufügen.

2. Endgerätevorrichtung nach Anspruch 1, wobei der ausführbare Anwendungscode ausgelegt ist, Transaktionsbelege, die in dem Datenspeichermittel gespeichert sind, an einen Zahlungsserver zu übertragen.

3. Endgerätevorrichtung nach einem der vorhergehenden Ansprüche, wobei der ausführbare Anwendungscode ausgelegt ist, Transaktionsinformationen von einem Zahlungsserver zu empfangen, die Transaktionsinformationen mit den Transaktionsbelegen in dem Datenspeichermittel zu vergleichen und Informationen über das Ergebnis des Vergleichs an den Zahlungsserver zu senden.

4. Endgerätevorrichtung nach einem der vorhergehenden Ansprüche, wobei der Webbrowser ausgelegt ist, es einem Benutzer zu erlauben, ein Abonnement für ein regelmäßig bereitgestelltes Produkt anzufordern, wobei der ausführbare Anwendungscode ausgelegt ist, die Abonnementsanforderung über das Kommunikationsnetzwerk an das Händlerendgerät zu übertragen, einen Abonnementsbeleg vom Händlerendgerät über das Kommunikationsnetzwerk zu empfangen, den empfangenen Abonnementsbeleg in dem Datenspeichermittel zu speichern und durch Identifizieren, ob es einen entsprechenden, in dem Datenspeichermittel gespeicherten Transaktionsbeleg oder Abonnementsbeleg gibt, zu ermitteln, ob für das Produkt vorher gezahlt worden ist.

5. Endgerätevorrichtung nach einem der vorhergehenden Ansprüche, wobei der ausführbare Anwendungscode ausgelegt ist, mit der Anforderung eindeutige Benutzeridentifikations-Informationen über das Kommunikationsnetzwerk zu übertragen, und der Transaktionsbeleg die eindeutigen Benutzeridentifikations-Informationen beinhaltet.

6. Verfahren des Erlangens eines Produkts und des Zahlens dafür in elektronischer Form, wobei das Verfahren umfasst:
Empfangen einer Benutzerauswahl (S2) in einem Webbrowser (31a) und Generieren von HTTP-Anforderungen, wobei die Anforderungen eine Anforderung eines besagten Produkts beinhaltet, umfassend eine HTTP-Anforderung mit Code, um die Anforderung als Anforderung eines besagten Produkts zu identifizieren (S3);
in einem Webproxy (31b) Empfangen der Anforderung vom Webbrowser, Ermitteln, ob die Anforderung eine Anforderung eines besagten Produkts ist oder nicht, durch Ermitteln, ob die Anforderung den Code beinhaltet oder nicht, und Übertragen der Anforderung unverändert über das Kommunikationsnetzwerk, wenn die Anforderung keine Anforderung eines besagten Produkts ist, Ermitteln, falls die Anforderung die eines besagten Produkts ist, ob für das Produkt vorher gezahlt worden ist, durch Identifizieren, ob es einen entsprechenden, in einem Datenspeichermittel, das Transaktionsbelege speichert, die Daten umfassen, die Produkte identifizieren, für die Zahlungen während mindestens einer vorangegangenen Transaktion geleistet wurden, gespeicherten Transaktionsbeleg gibt, und Übertragen der Anforderung des Produkts über das Kommunikationsnetzwerk mit jedwedem identifizierten Transaktionsbeleg für das Produkt an ein Händlerendgerät, Empfangen und Weiterleiten des Produkts vom Händlerendgerät zum Webbrowser und Empfangen eines Transaktionsbelegs für das Produkt vom Händlerendgerät über das Kommunikationsnetzwerk und Speichern des empfangenen Transaktionsbelegs in dem Datenspeichermittel;
wobei der Webproxy jedweden Beleg als ASCII codiert und den codierten Beleg der Anforderung vor dem Übertragen der Anforderung über das Kommunikationsnetzwerk hinzufügt.

7. Verfahren nach Anspruch 6, wobei der Webproxy gespeicherte Transaktionsbelege an einen Zahlungsserver überträgt.

8. Verfahren nach Anspruch 6 oder Anspruch 7, wobei der Webproxy Transaktionsinformationen von einem Zahlungsserver empfängt, die Transaktionsinformationen mit den gespeicherten Transaktionsbelegen vergleicht und Informationen über das Ergebnis des Vergleichs an den Zahlungsserver sendet.

9. Verfahren nach einem der Ansprüche 6 bis 8, wobei der Webbrowser eine Benutzer-Abonnementsauswahl empfängt und eine Anforderung eines Abonnements für ein regelmäßig bereitgestelltes Produkt generiert und der Webproxy die Abonnementsanforderung empfängt und über das Kommunikationsnetzwerk an den Anbieter überträgt, einen Abonnementsbeleg vom Anbieter über das Kommunikationsnetzwerk empfängt, den empfangenen Abonnementsbeleg in dem Datenspeichermittel speichert und durch Identifizieren, ob es einen entsprechenden gespeicherten Transaktionsbeleg oder Abonnementsbeleg gibt, ermittelt, ob für das Produkt vorher gezahlt worden ist.

10. Verfahren nach einem der Ansprüche 6 bis 9, wobei der Webproxy mit der Anforderung eindeutige Benutzeridentifikations-Informationen über das Kommunikationsnetzwerk überträgt und der Transaktionsbeleg die eindeutigen Benutzeridentifikations-Informationen beinhaltet.

11. Händlerendgerätevorrichtung zum Bereitstellen von Produkten in elektronischer Form für die Endgerätevorrichtung gemäß einem der Ansprüche 1 bis 6 über ein Kommunikationsnetzwerk, wobei die Vorrichtung umfasst:
einen Prozessor (61);
Produktspeichermittel (65) zum Speichern von Produkten in elektronischer Form;
Transaktionsspeichermittel (65) zum Speichern von Transaktionsdaten, um zu ermöglichen, dass die Benutzer für bereitgestellte besagte Produkte belastet werden;
eine Webserveranwendung (61b), die durch den Prozessor implementiert ist, zum Empfangen einer Anforderung eines besagten Produkts von einem Webproxy einer Benutzerendgerätevorrichtung über das Kommunikationsnetzwerk, wobei die Anforderung eine HTTP-Anforderung mit Code, um die Anforderung als Anforderung eines besagten Produkts zu identifizieren, und einen Transaktionsbeleg für jedwedes besagte Produkt umfasst, das vorher durch den Benutzer erworben wurde; und
ein Anwendungsprogramm (61b-d), das durch den Prozessor implementiert und an die Webserveranwendung angekoppelt ist, zum Ermitteln, ob ein gültiger Transaktionsbeleg für das Produkt mit der Anforderung beinhaltet ist, zum Bereitstellen des angeforderten Produkts für die Webserveranwendung, falls ein gültiger Transaktionsbeleg für das Produkt von der Benutzerendgerätevorrichtung des Benutzers empfangen worden ist, und zum Generieren und Bereitstellen eines Transaktionsbelegs für das angeforderte Produkt für die Webserveranwendung, falls kein gültiger Transaktionsbeleg mit der Anforderung beinhaltet ist;
wobei die Webserveranwendung (61b) ausgelegt ist, das angeforderte Produkt über das Kommunikationsnetzwerk an das Benutzerendgerät zu übertragen, falls ein gültiger Transaktionsbeleg für das Produkt vom Webproxy des Benutzerendgeräts empfangen worden ist, und das angeforderte Produkt mit dem generierten Transaktionsbeleg für das Produkt über das Kommunikationsnetzwerk an die Benutzerendgerätevorrichtung zu übertragen, falls kein gültiger Transaktionsbeleg für das Produkt mit der Anforderung beinhaltet ist; und das Anwendungsprogramm (61) ausgelegt ist, den generierten Transaktionsbeleg in dem Transaktionsspeichermittel aufzuzeichnen;
wobei der Transaktionsbeleg, so vorhanden, in der Anforderung als ASCII codiert ist; und das Anwendungsprogramm ausgelegt ist, jedweden Transaktionsbeleg in einer empfangenen Anforderung zu decodieren und einen generierten Transaktionsbeleg als ASCII zu codieren und das ASCII einem HTTP-Header hinzuzufügen, der mit dem Produkt gesendet wird, bevor das Produkt über das Kommunikationsnetzwerk durch den Webserver übertragen wird.

12. Händlerendgerätevorrichtung nach Anspruch 11, wobei die Anforderung eindeutigen Benutzeridentifikationscode beinhaltet, wobei das Anwendungsprogramm ausgelegt ist, eine Validierung des empfangenen eindeutigen Benutzeridentifikationscodes vorzunehmen und die Übertragung des angeforderten Produkts zu verhindern, falls die Validierung fehlschlägt.

13. Händlerendgerätevorrichtung nach Anspruch 12, die Speichermittel für unberechtigte Benutzer zum Speichern von Informationen über Benutzer beinhaltet, die nicht berechtigt sind, Produkte zu empfangen, wobei das Anwendungsprogramm ausgelegt ist, den empfangenen eindeutigen Benutzeridentifikationscode mit den Informationen in dem Speichermittel für unberechtigte Benutzer zu vergleichen und die Übertragung des angeforderten Produkts zu verhindern, falls der Vergleich aufzeigt, dass der Benutzer nicht berechtigt ist.

14. Händlerendgerätevorrichtung nach einem der Ansprüche 11 bis 13, wobei der Webserver ausgelegt ist, eine Abonnementsanforderung eines Produkts von einem Benutzerendgerät zu empfangen, und das Anwendungsprogramm ausgelegt ist, einen Abonnementsbeleg für das Produkt bereitzustellen, wobei der Webserver ausgelegt ist, den Abonnementsbeleg an die Benutzerendgerätevorrichtung zu übertragen, wobei das Anwendungsprogramm ausgelegt ist, zu ermitteln, ob ein gültiger Abonnementsbeleg für das Produkt mit der Anforderung des Produkts beinhaltet ist; und der Webserver ausgelegt ist, das angeforderte Produkt gebührenfrei über das Kommunikationsnetzwerk an die Benutzerendgerätevorrichtung zu übertragen, falls mit der Anforderung des Produkts ein gültiger Abonnementsbeleg für das Produkt von der Benutzerendgerätevorrichtung empfangen worden ist, und das angeforderte Produkt mit dem Transaktionsbeleg für das Produkt über das Kommunikationsnetzwerk an die Benutzerendgerätevorrichtung zu übertragen, falls mit der Anforderung des Produkts kein gültiger Transaktions- oder Abonnementsbeleg für das Produkt von der Benutzerendgerätevorrichtung empfangen worden ist.

15. Händlerendgerätevorrichtung nach einem der Ansprüche 11 bis 14, die Transaktionsspeichersteuerungsmittel zum Übertragen der Transaktionsdaten, die in dem Transaktionsspeichermittel gespeichert sind, über das Kommunikationsnetzwerk an einen Zahlungsserver beinhaltet.

16. Händlerendgerätevorrichtung nach Anspruch 15, wobei das Transaktionsspeichersteuerungsmittel ausgelegt ist, die Transaktionsdaten, die in dem Transaktionsspeichermittel gespeichert sind, nach der Übertragung der Transaktionsdaten über das Kommunikationsnetzwerk an den Zahlungsserver zu löschen.

17. Händlerendgerätevorrichtung nach einem der Ansprüche 11 bis 16, die ein Indexspeichermittel zum Speichern eines Index der Produkte, die in dem Produktspeichermittel gespeichert sind, als Webseiten mit Hypertextlinks beinhaltet, die Anforderungen von Produkten umfassen, wobei der Webserver ausgelegt ist, es einem Webbrowser, der durch einen Benutzer bedient wird, zu erlauben, auf das Indexspeichermittel zuzugreifen, um den Index zu verwenden, um eine Anforderung eines Produkts zu generieren.

18. Händlerendgerätevorrichtung nach einem der Ansprüche 11 bis 17, wobei der Webserver ausgelegt ist, das angeforderte Produkt gebührenfrei an das Benutzerendgerät zu übertragen, wenn ein gültiger Transaktionsbeleg für das Produkt vom Benutzer aus empfangen worden ist.

19. Verfahren des Bereitstellens von Produkten in elektronischer Form über ein Kommunikationsnetzwerk von einer Benutzerendgerätevorrichtung aus, wobei das Verfahren umfasst:
Empfangen einer Anforderung eines besagten Produkts von einem Webproxy einer Benutzerendgerätevorrichtung über das Kommunikationsnetzwerk an einer Webserveranwendung (61b), wobei die Anforderung eine HTTP-Anforderung mit Code, um die Anforderung als Anforderung eines besagten Produkts zu identifizieren, und einen Transaktionsbeleg für jedwedes besagte Produkt umfasst, das vorher durch den Benutzer erworben wurde; und
Ermitteln an einem Anwendungsprogramm (61b-d), das an die Webserveranwendung angekoppelt ist, ob ein gültiger Transaktionsbeleg für das Produkt mit der Anforderung beinhaltet ist, Bereitstellen des angeforderten Produkts für die Webserveranwendung, falls ein gültiger Transaktionsbeleg für das Produkt von der Benutzerendgerätevorrichtung des Benutzers aus empfangen worden ist, und Generieren und Bereitstellen eines Transaktionsbelegs für das angeforderte Produkt an die Webserveranwendung, falls kein gültiger Transaktionsbeleg mit der Anforderung beinhaltet ist;
Übertragen des angeforderten Produkts von der Webserveranwendung (61b) über das Kommunikationsnetzwerk an den Webproxy der Benutzerendgerätevorrichtung, falls ein gültiger Transaktionsbeleg für das Produkt von der Benutzerendgerätevorrichtung aus empfangen worden ist, und Übertragen des angeforderten Produkts mit dem generierten Transaktionsbeleg für das Produkt von der Webserveranwendung (61b) über das Kommunikationsnetzwerk an die Benutzerendgerätevorrichtung, falls kein gültiger Transaktionsbeleg für das Produkt mit der Anforderung beinhaltet ist; und
Aufzeichnen des generierten Transaktionsbelegs in einem Transaktionsspeichermittel, das Transaktionsdaten speichert, um zu ermöglichen, dass die Benutzer für bereitgestellte besagte Produkte belastet werden;
wobei der Transaktionsbeleg, so vorhanden, in der Anforderung als ASCII codiert ist; und das Anwendungsprogramm jedweden Transaktionsbeleg in einer empfangenen Anforderung decodiert und einen generierten Transaktionsbeleg als ASCII codiert und das ASCII einem HTTP-Header hinzufügt, der mit dem Produkt gesendet wird, bevor das Produkt über das Kommunikationsnetzwerk durch den Webserver übertragen wird.

20. Verfahren nach Anspruch 19, wobei die Anforderung eindeutigen Benutzeridentifikationscode beinhaltet, wobei das Anwendungsprogramm eine Validierung des empfangenen eindeutigen Benutzeridentifikationscodes vornimmt und die Übertragung des angeforderten Produkts verhindert, falls die Validierung fehlschlägt.

21. Verfahren nach Anspruch 20, das Speichermittel für unberechtigte Benutzer zum Speichern von Informationen über Benutzer beinhaltet, die nicht berechtigt sind, Produkte zu empfangen, wobei das Anwendungsprogramm den empfangenen eindeutigen Benutzeridentifikationscode mit den Informationen in dem Speichermittel für unberechtigte Benutzer vergleicht und die Übertragung des angeforderten Produkts verhindert, falls der Vergleich aufzeigt, dass der Benutzer nicht berechtigt ist.

22. Verfahren nach einem der Ansprüche 19 bis 21, wobei der Webserver eine Abonnementsanforderung für ein Produkt von einer Benutzerendgerätevorrichtung empfängt, das Anwendungsprogramm einen Abonnementsbeleg für das Produkt bereitstellt, der Webserver den Abonnementsbeleg an das Benutzerendgerät überträgt, das Anwendungsprogramm ermittelt, ob ein gültiger Abonnementsbeleg für das Produkt mit der Anforderung des Produkts beinhaltet ist und der Webserver das angeforderte Produkt gebührenfrei über das Kommunikationsnetzwerk an die Benutzerendgerätevorrichtung überträgt, falls mit der Anforderung des Produkts ein gültiger Abonnementsbeleg für das Produkt von der Benutzerendgerätevorrichtung aus empfangen worden ist, und das angeforderte Produkt mit dem Transaktionsbeleg für das Produkt über das Kommunikationsnetzwerk an die Benutzerendgerätevorrichtung überträgt, falls mit der Anforderung des Produkts kein gültiger Transaktions- oder Abonnementsbeleg für das Produkt von der Benutzerendgerätevorrichtung aus empfangen worden ist.

23. Verfahren nach einem der Ansprüche 19 bis 22, das Übertragen der Transaktionsdaten, die in dem Transaktionsspeichermittel gespeichert sind, über das Kommunikationsnetzwerk an einen Zahlungsserver beinhaltet.

24. Verfahren nach Anspruch 23, das Löschen der Transaktionsdaten, die in dem Transaktionsspeichermittel gespeichert sind, nach der Übertragung der Transaktionsdaten über das Kommunikationsnetzwerk an den Zahlungsserver beinhaltet.

25. Verfahren nach einem der Ansprüche 19 bis 24, das Speichern eines Index der Produkte, die in dem Produktspeichermittel gespeichert sind, als Webseiten mit Hypertextlinks beinhaltet, die Anforderungen von Produkten umfassen, und der Webserver erlaubt es einem Webbrowser, der durch einen Benutzer bedient wird, auf das Indexspeichermittel zuzugreifen, um den Index zu verwenden, um eine Anforderung eines Produkts zu generieren.

26. Verfahren nach einem der Ansprüche 19 bis 25, wobei der Webserver das angeforderte Produkt gebührenfrei an die Benutzerendgerätevorrichtung überträgt, wenn ein gültiger Transaktionsbeleg für das Produkt vom Benutzer aus empfangen worden ist.

27. Trägermedium, das computerlesbaren Code zum Steuern eines Computers trägt, um alle Schritte des Verfahrens nach einem der Ansprüche 6 bis 10 oder 19 bis 26 auszuführen.

## Revendications

1. Appareil de terminal pour une utilisation par un client dans un système de paiement sécurisé pour le paiement d'un produit sous forme électronique, l'appareil de terminal comprenant:
une interface de réseau (30) pour une connexion sur un réseau de communication;
un processeur (31);
une application de navigateur web (31a) exécutée par ledit processeur pour permettre qu'un utilisateur génère des requêtes HTTP, lesdites requêtes incluant une requête pour un dit produit comprenant une requête HTTP avec un code pour identifier la requête en tant que requête pour un dit produit;
un moyen de stockage de données (35) pour stocker des reçus de transaction comprenant des données identifiant des produits pour lesquels des paiements ont été réalisés pendant au moins une transaction précédente; et
un code d'application exécutable (31b) exécuté par ledit processeur pour jouer le rôle de proxy web pour recevoir ladite requête en provenance dudit moyen de navigateur web, pour déterminer si oui ou non ladite requête est une requête pour un dit produit en déterminant si oui ou non ladite requête inclut ledit code et pour transmettre ladite requête audit réseau de communication dans l'état inchangé si ladite requête n'est pas une requête pour ledit produit, pour déterminer si le produit a été payé au préalable si ladite requête est pour un dit produit en identifiant s'il y a un reçu de transaction correspondant stocké dans ledit moyen de stockage de données et pour commander ladite interface de réseau pour transmettre ladite requête pour le produit sur le réseau de communication à un terminal de commerçant avec un quelconque reçu de transaction identifié pour le produit, pour recevoir et faire passer ledit produit depuis ledit terminal de commerçant audit navigateur web et pour recevoir un reçu de transaction pour ledit produit depuis ledit terminal de commerçant sur le réseau de communication et pour stocker le reçu de transaction reçu dans ledit moyen de stockage de données,
dans lequel ledit code d'application exécutable est adapté pour coder un quelconque reçu en tant que ASCII et pour additionner l'ASCII à ladite requête avant transmission de la requête sur le réseau de communication.

2. Appareil de terminal selon la revendication 1, dans lequel ledit code d'application exécutable est adapté pour transmettre des reçus de transaction stockés dans ledit moyen de stockage de données à un serveur de paiement.

3. Appareil de terminal selon l'une quelconque des revendications précédentes, dans lequel ledit code d'application exécutable est adapté pour recevoir une information de transaction en provenance d'un serveur de paiement, pour comparer l'information de transaction aux reçus de transaction dans ledit moyen de stockage de données et pour envoyer une information concernant le résultat de la comparaison au serveur de paiement.

4. Appareil de terminal selon l'une quelconque des revendications précédentes, dans lequel ledit navigateur web est adapté pour permettre qu'un utilisateur demande un abonnement pour un produit fourni régulièrement, dans lequel ledit code d'application exécutable est adapté pour transmettre la requête d'abonnement sur le réseau de communication jusqu'au terminal du commerçant, pour recevoir un reçu d'abonnement depuis ledit terminal de commerçant sur le réseau de communication, pour stocker le reçu d'abonnement reçu dans ledit moyen de stockage de données et pour déterminer si le produit a été payé au préalable en identifiant s'il y a un reçu de transaction correspondant ou un reçu d'abonnement correspondant stocké dans ledit moyen de stockage de données.

5. Appareil de terminal selon l'une quelconque des revendications précédentes, dans lequel ledit code d'application exécutable est adapté pour transmettre une information d'identification d'utilisateur unique avec ladite requête audit réseau de communication, et ledit reçu de transaction inclut l'information d'identification d'utilisateur unique.

6. Procédé d'obtention et de paiement d'un produit sous forme électronique, le procédé comprenant:
la réception d'une sélection d'utilisateur (S2) dans un navigateur web (31a) et la génération de requêtes HTTP, lesdites requêtes incluant une requête pour un dit produit comprenant une requête HTTP avec un code pour identifier la requête en tant que requête pour un dit produit (S3);
dans un proxy web (31b), la réception de ladite requête en provenance dudit navigateur web, la détermination de si oui ou non ladite requête est une requête pour un dit produit en déterminant si oui ou non ladite requête inclut ledit code et la transmission de ladite requête sur un réseau de communication dans l'état inchangé si ladite requête n'est pas une requête pour un dit produit, la détermination de si le produit a été payé au préalable si ladite requête est pour un dit produit en identifiant s'il y a un reçu de transaction correspondante stocké dans un moyen de stockage de données qui stocke des reçus de transaction comprenant des données identifiant des produits pour lesquels des paiements ont été réalisés pendant au moins une transaction précédente et la transmission de ladite requête pour le produit sur le réseau de communication jusqu'à un terminal de commerçant avec un quelconque reçu de transaction identifié pour le produit, la réception et le passage dudit produit depuis ledit terminal de commerçant jusqu'audit navigateur web et la réception d'un reçu de transaction pour ledit produit depuis ledit terminal de commerçant sur le réseau de communication et le stockage du reçu de transaction reçu dans ledit moyen de stockage de données,
dans lequel ledit proxy web code un quelconque reçu en tant que ASCII et additionne le reçu codé à la requête avant transmission de la requête sur le réseau de communication.

7. Procédé selon la revendication 6, dans lequel ledit proxy web transmet des reçus de transaction stockés à un serveur de paiement.

8. Procédé selon la revendication 6 ou 7, dans lequel ledit proxy web reçoit une information de transaction en provenance d'un serveur de paiement, compare l'information de transaction avec les reçus de transaction stockés et envoie une information concernant le résultat de la comparaison sur le serveur de paiement.

9. Procédé selon l'une quelconque des revendications 6 à 8, dans lequel ledit navigateur web reçoit une sélection d'abonnement d'utilisateur et génère une requête pour un abonnement pour un produit fourni régulièrement, et ledit proxy web reçoit et transmet la requête d'abonnement sur le réseau de communication au vendeur, reçoit un reçu d'abonnement en provenance dudit vendeur sur le réseau de communication, stocke le reçu d'abonnement reçu dans ledit moyen de stockage de données et détermine si le produit a été payé au préalable en identifiant s'il y a un reçu de transaction stocké correspondant ou un reçu d'abonnement stocké correspondant.

10. Procédé selon l'une quelconque des revendications 6 à 9, dans lequel ledit proxy web transmet une information d'identification d'utilisateur unique avec ladite requête audit réseau de communication et ledit reçu de transaction inclut l'information d'identification d'utilisateur unique.

11. Appareil de terminal de commerçant pour fournir des produits sous forme électronique à l'appareil de terminal selon l'une quelconque des revendications 1 à 6 sur un réseau de communication, l'appareil comprenant:
un processeur (61);
un moyen de stockage de produits (65) pour stocker des produits sous forme électronique;
un moyen de stockage de transactions (65) pour stocker des données de transactions pour permettre que les utilisateurs soient facturés pour lesdits produits fournis;
une application de serveur web (61b) mise en oeuvre par ledit processeur pour recevoir une requête pour un dit produit en provenance d'un proxy web d'un appareil de terminal d'utilisateur sur le réseau de communication, ladite requête comprenant une requête HTTP avec un code pour identifier la requête en tant que requête pour un dit produit et un reçu de transaction pour un quelconque dit produit acheté au préalable par l'utilisateur; et
un programme d'application (61b-d) mis en oeuvre par ledit processeur et interfacé sur ladite application de serveur web pour déterminer si un reçu de transaction valide pour ledit produit est inclus avec la requête, pour fournir le produit demandé en requête à ladite application de serveur web si un reçu de transaction valide pour le produit est reçu depuis l'appareil de terminal d'utilisateur et pour générer ou fournir un reçu de transaction pour le produit demandé en requête à ladite application de serveur web si un reçu de transaction valide n'est pas inclus avec la requête,
dans lequel ladite application de serveur web (61b) est adaptée pour transmettre le produit demandé en requête sur le réseau de communication jusqu'au terminal d'utilisateur si un reçu de transaction valide pour le produit est reçu depuis le proxy web du terminal d'utilisateur, et pour transmettre le produit demandé en requête sur le réseau de communication jusqu'à l'appareil de terminal d'utilisateur avec le reçu de transaction généré pour le produit si un reçu de transaction valide pour le produit n'est pas inclus avec la requête; et ledit programme d'application (61) est adapté pour enregistrer le reçu de transaction généré dans ledit moyen de stockage de transactions,
dans lequel ledit reçu de transaction, s'il est présent, est codé dans la requête en tant que ASCII; et ledit programme d'application est adapté pour décoder un quelconque reçu de transaction dans une requête reçue et pour coder un reçu de transaction généré en tant que ASCII et pour additionner l'ASCII à un en-tête HTTP envoyé avec le produit avant que le produit ne soit transmis sur le réseau de communication par ledit serveur web.

12. Appareil de terminal de commerçant selon la revendication 11, dans lequel la requête inclut un code d'identification d'utilisateur unique, dans lequel ledit programme d'application est adapté pour réaliser une validation du code d'identification d'utilisateur unique reçu et pour empêcher la transmission du produit demandé en requête si la validation est en échec.

13. Appareil de terminal de commerçant selon la revendication 12, incluant un moyen de stockage d'utilisateurs non autorisés pour stocker une information concernant des utilisateurs qui ne sont pas autorisés à recevoir des produits, dans lequel ledit programme d'application est adapté pour comparer le code d'identification d'utilisateur unique reçu avec l'information dans ledit moyen de stockage d'utilisateurs non autorisés et pour empêcher la transmission du produit demandé en requête si la comparaison identifie que l'utilisateur n'est pas autorisé.

14. Appareil de terminal de commerçant selon l'une quelconque des revendications 11 à 13, dans lequel ledit serveur web est adapté pour recevoir une requête d'abonnement pour un produit en provenance d'un terminal d'utilisateur, et ledit programme d'application est adapté pour fournir un reçu d'abonnement pour le produit, dans lequel ledit serveur web est adapté pour transmettre le reçu d'abonnement à l'appareil de terminal d'utilisateur, ledit programme d'application est adapté pour déterminer si un reçu d'abonnement valide pour le produit est inclus avec la requête pour le produit; et ledit serveur web est adapté pour transmettre le produit demandé en requête sur le réseau de communication jusqu'à l'appareil de terminal d'utilisateur sans facturation si un reçu d'abonnement valide pour le produit est reçu depuis l'appareil de terminal d'utilisateur avec la requête pour le produit et pour transmettre le produit demandé en requête sur le réseau de communication jusqu'à l'appareil de terminal d'utilisateur avec le reçu de transaction pour le produit si une transaction valide ou un reçu d'abonnement pour le produit n'est pas reçu depuis l'appareil de terminal d'utilisateur avec la requête pour le produit.

15. Appareil de terminal de commerçant selon l'une quelconque des revendications 11 à 14, incluant un moyen de commande de stockage de transaction pour transmettre les données de transaction stockées dans ledit moyen de stockage de transactions à un serveur de paiement audit réseau de communication.

16. Appareil de terminal de commerçant selon la revendication 15, dans lequel ledit moyen de commande de stockage de transaction est adapté pour supprimer les données de transaction stockées dans ledit moyen de stockage de transactions après la transmission des données de transaction audit serveur de paiement audit réseau de communication.

17. Appareil de terminal de commerçant selon l'une quelconque des revendications 11 à 16, incluant un moyen de stockage d'index pour stocker des index des produits stockés dans ledit moyen de stockage de produits en tant que pages web avec des liens hypertexte comprenant des requêtes pour des produits, dans lequel ledit serveur web est adapté pour permettre qu'un navigateur web actionné par un utilisateur accède au moyen de stockage d'index pour utiliser l'index pour générer une requête pour un produit.

18. Appareil de terminal de commerçant selon l'une quelconque des revendications 11 à 17, dans lequel ledit serveur web est adapté pour transmettre ledit produit demandé en requête au terminal d'utilisateur sans facturation si un reçu de transaction valide pour le produit est reçu depuis l'utilisateur.

19. Procédé de fourniture de produits sous forme électronique depuis un appareil de terminal d'utilisateur sur un réseau de communication, le procédé comprenant:
la réception d'une requête pour un dit produit en provenance d'un proxy web d'un appareil de terminal d'utilisateur au niveau d'une application de serveur web (61b) sur le réseau de communication, ladite requête comprenant une requête HTTP avec un code pour identifier la requête en tant que requête pour un dit produit et un reçu de transaction pour un quelconque dit produit acheté au préalable par l'utilisateur; et
au niveau d'un programme d'application (61b-d) interfacé sur ladite application de serveur web, la détermination de si un reçu de transaction valide pour ledit produit est inclus avec la requête, la fourniture du produit demandé en requête à ladite application de serveur web si un reçu de transaction valide pour le produit est reçu depuis l'appareil de terminal d'utilisateur et la génération et la fourniture d'un reçu de transaction pour le produit demandé en requête à ladite application de serveur web si un reçu de transaction valide n'est pas inclus avec la requête;
la transmission du produit demandé en requête sur le réseau de communication depuis ladite application de serveur web (61b) jusqu'au proxy web de l'appareil de terminal d'utilisateur si un reçu de transaction valide pour le produit est reçu depuis l'appareil de terminal d'utilisateur et la transmission du produit demandé en requête sur le réseau de communication depuis ladite application de serveur web (61b) jusqu'à l'appareil de terminal d'utilisateur avec le reçu de transaction généré pour le produit si un reçu de transaction valide pour le produit n'est pas inclus avec la requête; et
l'enregistrement du reçu de transaction généré dans un moyen de stockage de transactions qui stocke des données de transaction pour permettre que les utilisateurs soient facturés pour lesdits produits fournis,
dans lequel ledit reçu de transaction, s'il est présent, est codé dans la requête en tant que ASCII; et ledit programme d'application décode un quelconque reçu de transaction dans une requête reçue et code un reçu de transaction généré en tant que ASCII et additionne l'ASCII à un entête HTTP envoyé avec le produit avant que le produit ne soit transmis sur le réseau de communication par ledit serveur web.

20. Procédé selon la revendication 19, dans lequel la requête inclut un code d'identification d'utilisateur unique, dans lequel ledit programme d'application réalise une validation du code d'identification d'utilisateur unique reçu et empêche la transmission du produit demandé en requête si la validation est en échec.

21. Procédé selon la revendication 20, incluant un moyen de stockage d'utilisateurs non autorisés pour stocker une information concernant des utilisateurs qui ne sont pas autorisés à recevoir des produits, dans lequel ledit programme d'application compare le code d'identification d'utilisateur unique reçu avec l'information dans ledit moyen de stockage d'utilisateurs non autorisés et empêche la transmission du produit demandé en requête si la comparaison identifie que l'utilisateur n'est pas autorisé.

22. Procédé selon l'une quelconque des revendications 19 à 21, dans lequel ledit serveur web reçoit une requête d'abonnement pour un produit en provenance d'un appareil de terminal d'utilisateur, ledit programme d'application fournit un reçu d'abonnement pour le produit, ledit serveur web transmet le reçu d'abonnement au terminal d'utilisateur, ledit programme d'application détermine si un reçu d'abonnement valide pour le produit est inclus avec la requête pour le produit; et ledit serveur web transmet le produit demandé en requête sur le réseau de communication jusqu'à l'appareil de terminal d'utilisateur sans facturation si un reçu d'abonnement valide pour le produit est reçu depuis l'appareil de terminal d'utilisateur avec la requête pour le produit et transmet le produit demandé en requête sur le réseau de communication jusqu'à l'appareil de terminal d'utilisateur avec le reçu de transaction pour le produit si une transaction valide ou un reçu d'abonnement pour le produit n'est pas reçu depuis l'appareil de terminal d'utilisateur avec la requête pour le produit.

23. Procédé selon l'une quelconque des revendications 19 à 22, incluant la transmission des données de transaction stockées dans ledit moyen de stockage de transactions à un serveur de paiement audit réseau de communication.

24. Procédé selon la revendication 23, incluant la suppression des données de transaction stockées dans ledit moyen de stockage de transactions après la transmission des données de transaction audit serveur de paiement audit réseau de communication.

25. Procédé selon l'une quelconque des revendications 19 à 24, incluant le stockage d'index des produits stockés dans ledit moyen de stockage de produits en tant que pages web avec des liens hypertexte comprenant des requêtes pour des produits, et ledit serveur web permet qu'un navigateur web actionné par un utilisateur accède au moyen de stockage d'index pour utiliser l'index pour générer une requête pour un produit.

26. Procédé selon l'une quelconque des revendications 19 à 25, dans lequel ledit serveur web transmet ledit produit demandé en requête à l'appareil de terminal d'utilisateur sans facturation si un reçu de transaction valide pour le produit est reçu depuis l'utilisateur.

27. Support d'information porteur d'un code lisible par ordinateur pour commander un ordinateur pour mettre en oeuvre toutes les étapes du procédé selon l'une quelconque des revendications 6 à 10 ou 19 à 26.
